# EUROPEAN PATENT APPLICATION

(11) **EP 4 604 282 A1**
(43) Date of publication of application: **20.08.2025**
(21) Application number: 23877338.6
(22) Date of filing: 12.10.2023
(51) Int. Cl.: H01M 50/131, H01G 11/78, H01M 50/103, H01M 50/105, H01M 50/121, H01M 50/129, H01M 50/141, H01M 50/15, H01M 50/159, H01M 50/16, H01M 50/176, H01M 50/178, H01M 50/184, H01M 50/186, H01M 50/188, H01M 50/193, H01M 50/198, H01M 50/531, H01M 50/548

(54) **POWER STORAGE DEVICE**

(30) Priority: 12.10.2022 JP 2022164368
(71) Applicant: Dai Nippon Printing Co., Ltd., Tokyo 162-8001 (JP)
(72) Inventor: SASAKI, Miho, Tokyo 162-8001 (JP); MIYASHIRO, Kae, Tokyo 162-8001 (JP); TAKEUCHI, Naoya, Tokyo 162-8001 (JP); URIU, Toshibumi, Tokyo 162-8001 (JP); AKUTSU, Koki, Tokyo 162-8001 (JP)
(74) Representative: Müller-Boré & Partner Patentanwälte PartG mbB
(86) International application number: PCT/JP2023/037082
(87) International publication number: WO 2024/080337

(57) **Abstract**

This power storage device comprises an electrode body, an electrode terminal connected to the electrode body, and an exterior body that seals the electrode body. The exterior body is configured from a film-like exterior member and includes a first sealing portion joined to the exterior member in a state where the exterior member envelops the electrode body. The exterior member includes a barrier layer. The power storage device has a resin film for a power storage device disposed at least partially inwards of the barrier layer. The resin film for a power storage device includes at least one among a water absorbent and a gas absorbent.

## Description

### Technical Field

The present invention relates to an electrical storage device.

### Background Art

Various types of electrical storage devices have been developed heretofore, and in every electrical storage device, an exterior member is an essential member for sealing electrode assemblies such as an electrode and an electrolyte. Metallic exterior members have been often used heretofore as exterior members for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior members for electrical storage devices that have often been heretofore used have the disadvantage that it is difficult to keep up with diversification in shape, and there is a limit on weight reduction.

Thus, heretofore a film-shaped laminate with a base material layer, a barrier layer, an adhesive layer and a heat-sealable resin layer laminated in this order has been proposed as an exterior member for electrical storage devices which is easily processed into diversified shapes and is capable of achieving thickness reduction and weight reduction (see, for example, Patent Literature 1).

In such an exterior member for electrical storage devices, generally, a concave portion is formed by cold molding, electrode assemblies such as an electrode and an electrolytic solution are disposed in a space formed by the concave portion, and heat-sealable resin layers are heat-sealed to obtain an electrical storage device with electrode assemblies housed in the exterior member for electrical storage devices.

### Citation List

### Patent Literature

PTL 1: Japanese Patent Laid-open Publication No. 2008-287971

### Summary of Invention

### Technical Problem

Ingress of moisture to the inside of an electrode assembly deteriorates the performance of the electrical storage device. For this reason, for example, when the above-described film-shaped laminate is used as an exterior member, a barrier layer (including, for example, a metal foil) is provided. By providing a barrier layer, ingress of moisture from the outside of the barrier layer can be suppressed.

However, when a heat-sealable resin layer of the exterior member is heat-sealed to seal an electrode assembly, ingress of moisture from an end surface of the heat-sealable resin layer may occur because the end surface of the heat-sealable resin layer is exposed to the outside.

If the heat-sealable resin layer of the exterior member absorbs water before the electrode assembly is sealed with the exterior member, moisture in the heat-sealable resin layer may enter the electrode assembly after the electrode assembly is sealed.

When the electrical storage device is an all-solid-state battery, contact between moisture and a solid electrolyte contained in an element forming the all-solid-state battery may generate a gas such as hydrogen sulfide depending on the type of the solid electrolyte.

An object of the present invention is to provide an electrical storage device which can exhibit at least one of the resistance to ingress of moisture into an electrode assembly and the ability to absorb a gas generated from the electrode assembly. Solution to Problem

An electrical storage device according to a first aspect of the present invention includes an electrode assembly, an electrode terminal connected to the electrode assembly, and an outer packaging that seals the electrode assembly. The outer packaging includes a film-shaped exterior member, and the outer packaging includes a first sealed portion in which the exterior member is joined with the electrode assembly wrapped therein. The exterior member includes a barrier layer. The electrical storage device includes a resin film for electrical storage devices, which is disposed on at least a part of a region inside the barrier layer. The resin film for electrical storage devices contains at least one of a water absorbent and a gas absorbent.

An electrical storage device according to a second aspect of the present invention is the electrical storage device according to the first aspect, in which the resin film for electrical storage devices is used as a heat-sealable resin layer of the exterior member.

An electrical storage device according to a third aspect of the present invention is the electrical storage device according to the first or second aspect, in which the resin film for electrical storage devices is used as an adhesion film for terminals, which joins the exterior member and the electrode terminal.

An electrical storage device according to a fourth aspect of the present invention is the electrical storage device according to any one of the first to third aspects, further including a lid which is disposed on a lateral side of the electrode assembly and to which the electrode terminal is attached, in which a part of the lid is joined to the exterior member.

An electrical storage device according to a fifth aspect of the present invention is the electrical storage device according to the fourth aspect, in which a material for forming the lid includes at least one of a resin material and a metal material.

An electrical storage device according to a sixth aspect of the present invention is the electrical storage device according to the fourth or fifth aspect, in which the resin film for electrical storage devices is disposed on at least a part of a region between the lid and the electrode assembly.

An electrical storage device according to a seventh aspect of the present invention is the electrical storage device according to any one of the fourth to sixth aspects, in which the resin film for electrical storage devices is disposed on at least a part of a region between the lid and the electrode terminal.

An electrical storage device according to an eighth aspect of the present invention is the electrical storage device according to any one of the fourth to seventh aspects, in which the resin film for electrical storage devices is disposed on at least a part of a region between the lid and the exterior member.

An electrical storage device according to a ninth aspect of the present invention is the electrical storage device according to any one of the fourth to eighth aspects, in which the lid has a hole through which the electrode terminal passes, and the resin film for electrical storage devices is disposed in the hole.

An electrical storage device according to a tenth aspect of the present invention is the electrical storage device according to any one of the fourth to ninth aspects, in which the lid includes a first surface facing the electrode assembly, and a second surface on a side opposite to the first surface, and the resin film for electrical storage devices is joined to at least a part of the second surface of the lid.

### Advantageous Effects of Invention

According to the present invention, it is possible to provide an electrical storage device which can exhibit at least one of the resistance to ingress of moisture into an electrode assembly and the ability to absorb hydrogen sulfide generated from the electrode assembly.

### Brief Description of Drawings

[Fig. 1A] Fig. 1A is a perspective view schematically showing an electrical storage device according to a first embodiment.
[Fig. 1B] Fig. 1B is a sectional view showing an example of a layer configuration of the exterior member of Fig. 1A.
[Fig. 2] Fig. 2 is a plan view schematically showing an electrical storage device.
[Fig. 3] Fig. 3 is a side view schematically showing an electrical storage device.
[Fig. 4] Fig. 4 shows a state in which an exterior member is wound around an electrode assembly in the process of manufacturing the electrical storage device according to the first embodiment when viewed from the lateral side.
[Fig. 5] Fig. 5 shows a state in which an exterior member is wound around an electrode assembly in the process of manufacturing the electrical storage device according to the first embodiment when viewed from the lower side.
[Fig. 6] Fig. 6 schematically shows a part of a cross-section taken along VI-VI in Fig. 2.
[Fig. 7A] Fig. 7A is a schematic diagram for illustrating a method for forming a second sealed portion.
[Fig. 7B] Fig. 7B is a sectional view showing another example taken along line VI-VI in Fig. 2.
[Fig. 7C] Fig. 7C is a sectional view showing still another example taken along line VI-VI in Fig. 2.
[Fig. 7D] Fig. 7D is a sectional view showing still another example taken along line VI-VI in Fig. 2.
[Fig. 7E] Fig. 7E is a sectional view showing still another example taken along line VI-VI in Fig. 2.
[Fig. 7F] Fig. 7F is a sectional view showing an example of a layer configuration of a resin film for electrical storage devices which is provided in the electrical storage device of the first embodiment.
[Fig. 7G] Fig. 7G is a sectional view showing another example of a layer configuration of a resin film for electrical storage devices which is provided in the electrical storage device of the first embodiment.
[Fig. 7H] Fig. 7H is a sectional view showing still another example of a layer configuration of a resin film for electrical storage devices which is provided in the electrical storage device of the first embodiment.
[Fig. 8] Fig. 8 is a flowchart showing an example of a procedure for manufacturing the electrical storage device according to the first embodiment.
[Fig. 9] Fig. 9 is a plan view schematically showing an electrical storage device according to a second embodiment.
[Fig. 10] Fig. 10 is a side view schematically showing an electrical storage device.
[Fig. 11] Fig. 11 is a perspective view schematically showing a lid.
[Fig. 12] Fig. 12 shows a first example in which a lid and an electrode terminal are integrally formed.
[Fig. 13] Fig. 13 shows a second example in which a lid and an electrode terminal are integrally formed.
[Fig. 14] Fig. 14 is a flowchart showing an example of a procedure for manufacturing the electrical storage device according to the second embodiment 2.
[Fig. 15] Fig. 15 is a flowchart showing another example of a procedure for manufacturing the electrical storage device according to the second embodiment.
[Fig. 16] Fig. 16 shows a state in which an exterior member is wound around an electrode assembly in a third embodiment when viewed from the lateral side.
[Fig. 17] Fig. 17 shows a state in which an exterior member is wound around an electrode assembly and a lid is attached to the exterior member in the third embodiment when viewed from the lower side.
[Fig. 18] Fig. 18 is a flowchart showing an example of a procedure for manufacturing the electrical storage device according to the third embodiment.
[Fig. 19] Fig. 19 is a plan view schematically showing an electrical storage device according to a fourth embodiment.
[Fig. 20] Fig. 20 is a side view schematically showing the electrical storage device according to the fourth embodiment.
[Fig. 21] Fig. 21 shows a state in which an exterior member is wound around an electrode assembly in a modification when viewed from the lateral side.
[Fig. 22] Fig. 22 is a perspective view schematically showing an electrical storage device of the modification.
[Fig. 23] Fig. 23 is a perspective view schematically showing a lid and an electrode terminal attached to the lid in the modification.
[Fig. 24] Fig. 24 shows an insertion step of a method for manufacturing the electrical storage device of the modification.
[Fig. 25] Fig. 25 is a perspective view schematically showing a lid and an electrode terminal attached to the lid in the modification.
[Fig. 26] Fig. 26 is a perspective view schematically showing the electrical storage device to which the lid of Fig. 23 is attached.
[Fig. 27] Fig. 27 is a front view schematically showing a lid in another modification.
[Fig. 28] Fig. 28 is a front view schematically showing a lid in still another modification.
[Fig. 29A] Fig. 29A is a sectional view showing an example of disposition of a resin film for electrical storage devices in the electrical storage device of the second embodiment.
[Fig. 29B] Fig. 29B is a sectional view showing another example of disposition of the resin film for electrical storage devices in the electrical storage device of Fig. 29A.
[Fig. 29C] Fig. 29C is a sectional view showing still another example of disposition of the resin film for electrical storage devices in the electrical storage device of Fig. 29A.
[Fig. 30] Fig. 30 is a plan view schematically showing an electrical storage device of another modification.
[Fig. 31] Fig. 31 shows a state in which an exterior member is wound around an electrode assembly in the process of manufacturing an electrical storage device of another modification when viewed from the lateral side.
[Fig. 32] Fig. 32 is an enlarged view of the X part of Fig. 31.
[Fig. 33] Fig. 33 is a sectional view of an electrical storage device of a modification.
[Fig. 34] Fig. 34 is a sectional view of an electrical storage device of a modification.

### Description of Embodiments

Hereinafter, embodiments of the present invention will be described in detail with reference to the drawings. In the drawings, like or equivalent parts are denoted by like symbols, and the descriptions thereof are not repeated. In the present embodiment, a numerical range indicated by the term "A to B" means "A or more" and "B or less". For example, the expression of "2 to 15 mm" means 2 mm or more and 15 mm or less. In numerical ranges serially described in the present embodiment, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range.

### [1. First Embodiment]

### <1-1. Configuration of electrical storage device>

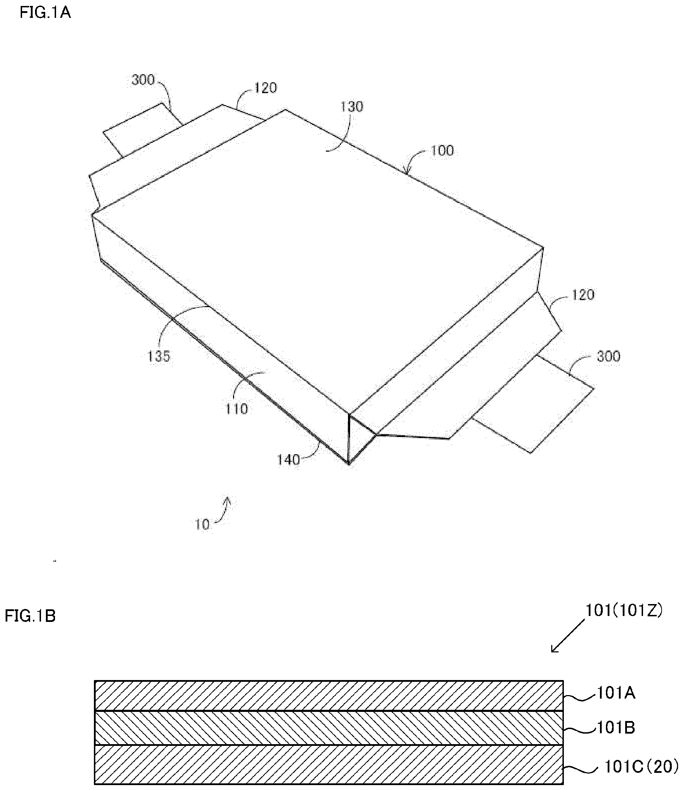

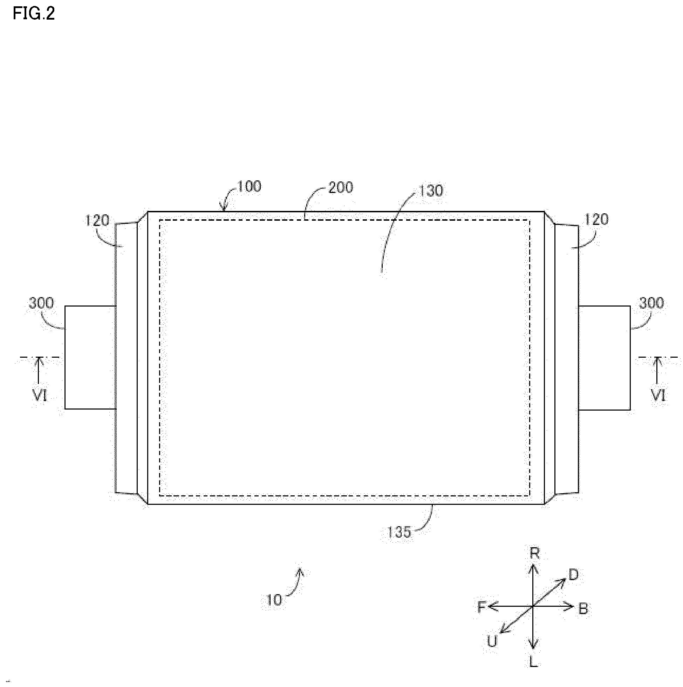

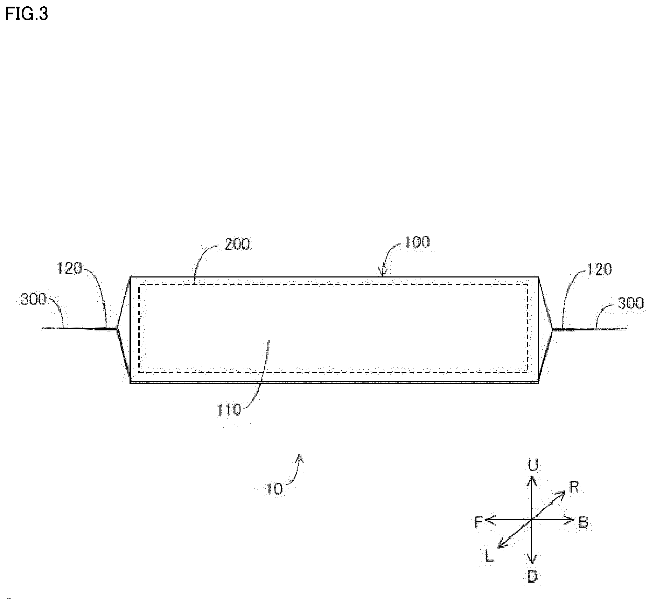

Fig. 1A is a perspective view schematically showing an electrical storage device 10 according to a first embodiment. Fig. 2 is a plan view schematically showing the electrical storage device 10. Fig. 3 is a side view schematically showing the electrical storage device 10. In each of Figs. 2 and 3, the direction along arrow UD indicates a thickness direction of the electrical storage device 10, and the direction along arrow LR indicates a width direction of the electrical storage device 10. The direction along arrow FB indicates a depth direction of the electrical storage device 10. The directions indicated by each of arrows UDLRFB are also shared with the subsequent drawings.

Referring to Figs. 1A, 1B, 2 and 3, the electrical storage device 10 includes an electrode assembly 200, an outer packaging 100, and a plurality of (two) electrode terminals 300. The electrode assembly 200 includes electrodes (a positive electrode and a negative electrode) forming an electrical storage member of a lithium ion battery, a capacitor or an all-solid-state battery, and the like. The shape of the electrode assembly 200 is substantially a cuboid. Note that the term "substantially cuboid" means including a perfect cuboid, and for example, a solid that can be seen as a cuboid by modifying the shape of a part of the outer surface thereof.

The electrode terminal 300 is a metal terminal for use in input and output of electrical power in the electrode assembly 200. One end part of the electrode terminal 300 is electrically connected to an electrode (positive electrode or negative electrode) in the electrode assembly 200, and the other end part protrudes outward from an end edge of the outer packaging 100.

The metal material forming the electrode terminal 300 is, for example, aluminum, nickel, or copper. For example, when the electrode assembly 200 is a lithium ion battery, the electrode terminal 300 connected to the positive electrode is typically made from aluminum or the like, and the electrode terminal 300 connected to the negative electrode is typically made from copper, nickel or the like.

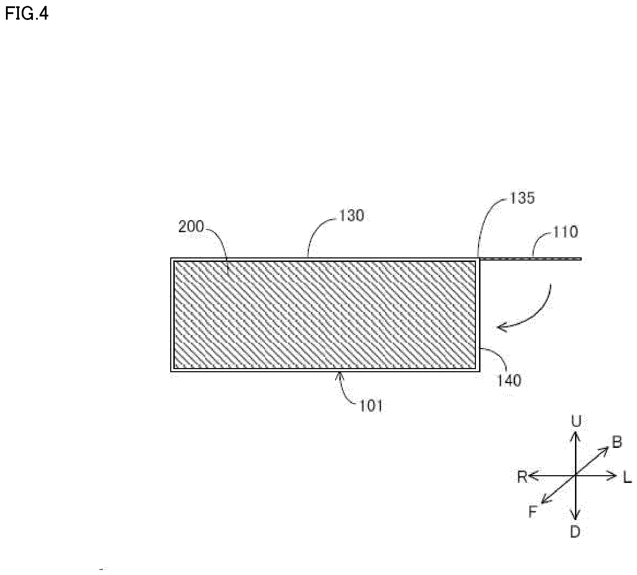

The outer packaging 100 includes an exterior member 101 (e.g., Fig. 4) and seals the electrode assembly 200. In the electrical storage device 10, the exterior member 101 is wound around the electrode assembly 200 to seal an open portion, thereby forming the outer packaging 100.

For example, there is a method in which a housing portion (recess) for housing the electrode assembly 200 is formed in the exterior member 101 through cold molding. However, it is not always easy to form a deep housing portion by such a method. If an attempt is made to form a deep (for example, 15 mm in terms of molding depth) housing portion (recess) by cold molding, pinholes or cracks are generated in the exterior member, leading to a rise in possibility that battery performance is deteriorated. On the other hand, since the outer packaging 100 seals the electrode assembly 200 by winding the exterior member 101 around the electrode assembly 200, the electrode assembly 200 can be easily sealed regardless of the thickness of the electrode assembly 200. For reducing a dead space between the electrode assembly 200 and the exterior member 101 in order to improve the volume energy density of the electrical storage device 10, it is preferable that the exterior member 101 is wound in a state of being in contact with the outer surface of the electrode assembly 200. In an all-solid-state battery, it is necessary to eliminate the space between the electrode assembly 200 and the exterior member 101 from the viewpoint that it is necessary to uniformly apply a high pressure from the outer surface of the battery for exhibiting battery performance, and therefore, it is preferable that the exterior member 101 is wound in a state of being in contact with the outer surface of the electrode assembly 200.

Fig. 1B is a sectional view showing an example of a layer configuration of the exterior member 101. The exterior member 101 is, for example, a laminate 101Z (laminate film) including a base material layer 101A, a barrier layer 101B and a heat-sealable resin layer 101C in the stated order. The exterior member 101 is not required to include all these layers, and may be free of, for example, the base material layer 101A. The exterior member 101 is preferably heat-sealable.

The base material layer 101A in the exterior member 101 is a layer for imparting heat resistance to the exterior member 101 to suppress generation of pinholes which may occur during processing or distribution. The base material layer 101A includes, for example, at least one of a stretched polyester resin layer and a stretched polyamide resin layer. For example, when the base material layer 101A includes at least one of a stretched polyester resin layer and a stretched polyamide resin layer, the barrier layer 101B can be protected during processing of the exterior member 101 to suppress breakage of the exterior member 101. From the viewpoint of increasing the tensile elongation of the exterior member 101, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 101A may include both a stretched polyester resin layer and a stretched polyamide resin layer. From the viewpoint of film strength, the thickness of the base material layer 101A is, for example, preferably 5 to 300 µm, more preferably 20 to 150 µm.

The barrier layer 101B in the exterior member 101 is made from, for example, a metal foil from the viewpoint of moisture resistance, processability such as extensibility, and cost. As the metal foil, specifically, aluminum, a steel plate, stainless steel, or the like can be used. In addition, the metal foil preferably contains iron from the viewpoint of suitability for packaging in packaging of the electrode assembly 200, and pinhole resistance. The content of iron in the metal foil is preferably 0.5 to 5.0 mass%, more preferably 0.7 to 2.0 mass%. When the content of iron is 0.5 mass% or more, the exterior member 101 has suitability for packaging, excellent pinhole resistance and extensibility. When the content of iron is 5.0 mass% or less, the exterior member 101 has excellent flexibility.

From the viewpoint of barrier properties, pinhole resistance and suitability for packaging, the thickness of the barrier layer 101B is, for example, preferably 15 to 100 µm, more preferably 30 to 80 µm. When the thickness of the barrier layer 101B is 15 µm or more, the exterior member 101 is less likely to be broken even if stress is applied by packaging processing. When the thickness of the barrier layer 101B is 100 µm or less, an increase in mass of the exterior member 101 can be reduced, and a decrease in weight energy density of the electrical storage device 10 can be suppressed.

When the barrier layer 101B is a metal foil, it is preferable that a corrosion-resistant film is provided at least on a surface on a side opposite to the base material layer 101A for preventing dissolution and corrosion. The barrier layer 101B may include a corrosion-resistant film on each of both surfaces. Here, the corrosion-resistant film refers to a thin film obtained by subjecting the surface of the barrier layer 101B to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 101B. Specifically, the corrosion-resistant film means a film which improves the acid resistance of the barrier layer 101B (acid-resistant film), a film which improves the alkali resistance of the barrier layer 101B (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 101B is provided with the corrosion-resistant film, the barrier layer 101B is regarded as including the corrosion-resistant film.

The corrosion-resistant film prevents delamination between the barrier layer 101B (e.g. an aluminum alloy foil) and the base material layer 101A during molding of the exterior member 101, and prevents dissolution and corrosion of the surface of the barrier layer 101B, particularly dissolution and corrosion of aluminum oxide present on the surface of the barrier layer 101B when the barrier layer 101B is an aluminum alloy foil, by hydrogen fluoride generated by reaction of an electrolyte with moisture. The corrosion-resistant film further exhibits the effects of improving the bondability (wettability) of the surface of the barrier layer 101B, preventing delamination between the base material layer 101A and the barrier layer 101B during heat-sealing, and preventing delamination between the base material layer 101A and the barrier layer 101B during molding of the exterior member 101.

The heat-sealable resin layer 101C in the exterior member 101 is a layer that imparts a heat sealing property to the exterior member 101 by heat sealing. Examples of the heat-sealable resin layer 101C include resin films made from an acid-modified polyolefin-based resin obtained by graft-modification of a polyolefin-based resin or a polyolefin-based resin with an acid such as maleic anhydride. From the viewpoint of sealability and strength, the thickness of the heat-sealable resin layer 101C is, for example, preferably 20 to 300 µm, more preferably 40 to 150 µm.

If the heat-sealable resin layer 101C is excessively hard, there is a possibility that when a raw material film in a roll form, or the exterior member 101 is made into the bag-shaped outer packaging 100, slipping occurs at a contact point with the apparatus, so that conveyance cannot be suitably performed. In addition, if by the resulting friction, the exterior member 101 is scratched, the heat-sealable resin layer 101C is damaged. Since the damage to the heat-sealable resin layer 101C may reduce heat-sealing strength, the heat-adhesive resin layer preferably has a property of moderately slipping. Therefore, when a material that does not slip or a material that hardly slips is used as a material for forming the heat-sealable resin layer 101C, it is preferable to add a slipping agent from the viewpoint of the conveyance property.

Further, from the viewpoint of resistance to contamination and processability, the tensile elastic modulus of the heat-sealable resin layer 101C preferably falls within the range of 500 MPa or more and 1,000 MPa or less as measured in accordance with the provisions of JIS K7161: 2014. The tensile elastic modulus of the heat-sealable resin layer 101C is more preferably in the range of 500 MPa or more and 800 MPa or less, still more preferably in the range of 500 MPa or more and 750 MPa or less, still more preferably in the range of 500 MPa or more and 700 MPa or less, still more preferably in the range of 510 MPa or more and 700 MPa or less.

When the tensile elastic modulus of the heat-sealable resin layer 101C is 500 MPa or more, contamination of an apparatus during molding and conveyance of the outer packaging 100 is effectively suppressed. That is, when the tensile elastic modulus of the heat-sealable resin layer 101C is 500 MPa or more, the slipping agent present on the surface of the heat-sealable resin layer 101C is hardly scraped by an apparatus or the like, so that the lubricant present on the surface portion of the heat-sealable resin layer 101C is unlikely transfer to the apparatus or the like, and contamination of the apparatus or the like is effectively suppressed. When the tensile elastic modulus of the heat-sealable resin layer 101C is 1,000 MPa or less, high sealing strength is exhibited by heat-sealing. That is, when the tensile elastic modulus of the heat-sealable resin layer 101C is 1,000 MPa or less, the heat-sealable resin layer 101C is unlikely to embrittle, so that high sealing strength is exhibited by heat-sealing. If the tensile elastic modulus of the heat-sealable resin layer 101C is more than 1,000 MPa, the heat-sealable resin layer 101C is likely to be embrittle, and easily delaminates from the barrier layer 101B laminated to the heat-sealable resin layer 101C with an adhesive layer interposed therebetween, so that the sealing strength may decrease, or whitening or cracking may occur in a stretched portion due to stretching at a folded portion during molding of the outer packaging 100, leading to deterioration of battery performance. If the tensile elastic modulus of the heat-sealable resin layer 101C is more than 1,000 MPa, extrudability is deteriorated, resulting in deterioration of productivity. Therefore, in the exterior member 101 of the electrical storage device 10 of the present embodiment, the tensile elastic modulus of the heat-sealable resin layer 101C is set within the range of 500 to 1,000 MPa to suitably exhibit the effect of suppressing contamination of the apparatus or the like and the effect of improving the sealing strength by heat-sealing. The tensile elastic modulus of the heat-sealable resin layer 101C can be adjusted by adjusting the molecular weight, the melt mass flow rate (MFR), and the like of the resin for forming the heat-sealable resin layer 101C.

In addition, when the operations of matching of seal portions for performing pillow type sealing, bending and the like during formation of the bag-shaped outer packaging 100 are considered as processing, the same problems as described above occur during the processing. In particular, during the processing, the exterior member 101 is easily scratched, and it is important to solve the above-described problems. When the tensile elastic modulus of the heat-sealable resin layer 101C is in the range of 500 MPa or more and 1,000 MPa or less, processing can be successfully performed.

The exterior member 101 preferably includes one or more layers having a buffer function (hereinafter, referred to as "buffer layers") outside the heat-sealable resin layer 101C (on the upper side in Fig. 1B), more preferably outside the barrier layer 101B. The buffer layer may be laminated outside the base material layer 101A, and the base material layer 101A may also function as a buffer layer. When the exterior member 101 includes a plurality of buffer layers, the buffer layers may lie side-by-side, or may be laminated with the base material layer 101A, the barrier layer 101B or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 0.5 mm to 10 mm, 0.5 mm to 5 mm, or 0.5 mm to 2 mm.

When the exterior member 101 includes a buffer layer, the buffer layer functions as a cushion, so that the exterior member 101 is prevented from being damaged by the impact of falling of the electrical storage device 10 or handling during manufacturing of the electrical storage device 10.

In the outer packaging 100 according to the present embodiment, a deep housing portion can be formed, so that the weight of the electrode assembly 200 increases, leading to an increase in attack on the outer packaging 100 which is caused by impacts or the like. Therefore, in the present embodiment, when the thickness of the exterior member 101 is 195 µm or less, and the thickness of the barrier layer 101B is 20 to 85 µm, the piercing strength of the exterior member 101 pierced from the base material layer 101A side is preferably 30 N or more as measured by a method conforming to the provisions of JIS Z1707: 1997. The piercing strength is preferably in the range of, for example, about 30 to 45 N, about 30 to 40 N, about 35 to 45 N, or about 35 to 40 N. The method for measuring the piercing strength of the exterior member 101 is as follows.

The piercing strength of the exterior member 101 from the base material layer 101A side is measured by a method conforming to JIS Z1707: 1997. Specifically, in a measurement environment at 23 ± 2°C and a relative humidity of 50 ± 5%, a test piece is fixed with a table having a diameter of 115 mm and having an opening with a diameter of 15 mm at the center, and a pressing plate, and pierced at a speed of 50 ± 5 mm per minute with a semicircular needle having a diameter of 1.0 mm and a tip shape radius of 0.5 mm, and the maximum stress before the needle completely passes through the test piece is measured. The number of test pieces is 5, and an average for the test pieces is determined. In the case where there is a shortage of test pieces so that five test pieces cannot be measured, test pieces available for the measurement are measured, and an average value for the test pieces is determined. As a piercing strength measuring apparatus, ZP-500N (force gauge) and MX2-500N (measurement stand) manufactured by IMADA Architects Ltd. can be used.

In the electrical storage device 10 of the present embodiment, rubbing between the electrical storage devices 10, friction between the electrical storage device 10 and the neighboring members, friction during conveyance the electrical storage device 10, and the like becomes more likely to occur as the weight of the electrode assembly 200 increases. Therefore, in the present embodiment, it is preferable that high ability to fix the ink on the surface of the exterior member 101 on the base material layer 101A side (a good printing characteristic) is exhibited, and the fixed ink is unlikely to disappear. From such a viewpoint, in the exterior member 101 according to the present embodiment, the contact angle of the surface on the base material layer 101A side is preferably 80° or less. That is, when the base material layer 101A forms the outermost surface in the exterior member 101, the contact angle of the surface of the base material layer 101A is 80° or less. When a coating layer is provided outside the base material layer 101A, the contact angle of the surface of the coating layer is 80° or less. In the present embodiment, since the contact angle of the surface of the exterior member 101 on the base material layer 101A side is 80° or less, the ink is hardly repelled at a surface on the base material layer 101A side, an excellent printing characteristic is exhibited, and the fixed ink is unlikely to disappear. In particular, when pad printing is performed with ink on exterior member 101 whose moldability is improved by presence of a slipping agent on its surface on the base material layer 101A side, the ink may be repelled at the surface on the base material layer 101A side, leading to occurrence of a printing failure. However, even in such a case, the exterior member 101 of the electrical storage device 10 of the present embodiment hardly suffers from repelling of the ink because the contact angle of the surface on the base material layer 101A side is 80° or less, which is particularly suitable as the exterior member 101 in which printed characters or the like are formed on the surface of the base material layer 101A by pad printing.

In the present embodiment, the contact angle of the surface on the base material layer 101A side is more preferably 79 ° or less, still more preferably 72 ° or less from the viewpoint of improving printability and making the fixed ink unlikely to disappear. The contact angle of the surface on the base material layer 101A side can be determined by measuring the contact angle of the interface between the base material and a water droplet 5 seconds after dropping of the water using LSE-A210 manufactured by NiCK Corporation.

In the present embodiment, the contact angle of the surface on the base material layer 101A side can be suitably set to 80° or less by, for example, applying a corona treatment to the surface on the base material layer 101A side. The corona treatment can be performed by applying corona discharge to the surface on the base material layer 101A side with using a commercially available corona surface treatment apparatus. As conditions of the corona treatment, for example, the surface on the base material layer 101A side is treated at a rate of 10 MT/min with an application output of 1 Kw or more, whereby the contact angle of the surface on the base material layer 101A side can be set to 80° or less.

When printing is performed on the surface of the exterior member 101 with ink, a corona treatment is applied, and a step of performing printing on at least a part of the surface of the base material layer 101A with ink is then carried out. The printing method is not particularly limited. When printing is performed on the exterior member 101 after molding, inkjet printing, and pad printing are preferred. Even by pad printing in which ink is easily repelled at the base material layer 101A having a slipping agent on a surface thereof, printing can be suitably performed on the exterior member 101 of the electrical storage device 10 of the present embodiment with ink because the contact angle of a surface on the base material layer 101A side is set to 80° or less. Therefore, for example, printed characters such as a bar code, a pattern and letters can be suitably formed on at least a part of the surface of the base material layer 101A.

Fig. 4 shows a state in which the exterior member 101 is wound around the electrode assembly 200 in the process of manufacturing an electrical storage device 10 when viewed from the lateral side. As shown in Fig. 4, the exterior member 101 is wound around the electrode assembly 200. In this case, the outermost layer of the electrode assembly 200 is not necessarily an electrode, and may be, for example, a protective tape or a separator. With the exterior member 101 wound around the electrode assembly 200, surfaces of the exterior member 101 which face each other (heat-sealable resin layers) are heat-sealed to form a first sealed portion 110. The first sealed portion 110 may be formed by joining the innermost layer and the outermost layer of the exterior member 101. In this case, each of the innermost layer and the outermost layer of the exterior member 101 are preferably the heat-sealable resin layer 101C.

The root portion of the first sealed portion 110 is preferably located on a side 135 of the outer packaging 100. In the present embodiment, the side 135 is formed at a boundary between a first surface 130 and a second surface 140 having an area smaller than that of the first surface 130. That is, in the present embodiment, the root portion of the first sealed portion 110 can be said to be formed at the boundary between the first surface 130 and the second surface 140, and can be said to be not present on either the first surface 130 or the second surface 140. The root portion of the first sealed portion 110 may be located in a region other than the side 135. In the electrical storage device 10, the first sealed portion 110 is bent toward the second surface 140 around the side 135. In the electrical storage device 10, the first sealed portion 110 is in contact with the second surface 140, and covers substantially the entire second surface 140. The term "substantially entire second surface 140" means a region that occupies 75% or more of the area of the second surface 140.

That is, in the electrical storage device 10, the first sealed portion 110 is not formed on the first surface 130 having a large area. The first surface 130 is flatter as compared to a case where a sealed portion such as the first sealed portion 110 is in contact with the first surface 130. Therefore, even if another electrical storage device 10 is placed on the first surface 130, the other electrical storage device 10 does not tilt. As a result, the electrical storage device 10 is such that when a plurality of electrical storage devices 10 are stacked, the unevenness of the distribution of pressure applied to the electrical storage device 10 can be suppressed. In other words, when a module is formed by stacking a plurality of electrical storage devices 10, the first sealed portion 110 is not disposed on a surface (first surface 130) adjacent to the neighboring electrical storage device 10. In an all-solid-state battery, such a configuration is preferable from the viewpoint that it is necessary to uniformly apply a high pressure from the outer surface of the battery for exhibiting battery performance.

In the electrical storage device 10, the root portion of the first sealed portion 110 is located on the side 135 of the outer packaging 100. Therefore, in the electrical storage device 10, it is possible to secure a wider joining region in the first sealed portion 110 as compared to a case where the root portion of the first sealed portion 110 is located on the second surface 140 (for example, at the central portion of the second surface 140 in the direction along arrow UD). The joining region of the first sealed portion 110 is not necessarily the entire region of the first sealed portion 110, and may be a part of the first sealed portion 110 which is, for example, only a region near the root portion of the first sealed portion 110.

In the electrical storage device 10, substantially the entire second surface 140 is covered with the first sealed portion 110. That is, in the electrical storage device 10, for example, the length of the first sealed portion 110 in the direction along arrow UD is larger as compared to a case where the first sealed portion 110 covers no more than half of the region of the second surface 140 (see Fig. 3). Therefore, in the electrical storage device 10, it is possible to secure a wide joining region in the first sealed portion 110. In addition, since substantially the entire second surface 140 is covered with the first sealed portion 110, the electrical storage device 10 stabilizes even if the electrical storage device 10 is disposed upright with the second surface 140 being in contact with the placement surface. That is, the electrical storage device 10 is unlikely to tilt with respect to the placement surface. Therefore, such a configuration is effective, for example, when a plurality of electrical storage devices 10 are arranged side by side to form a module.

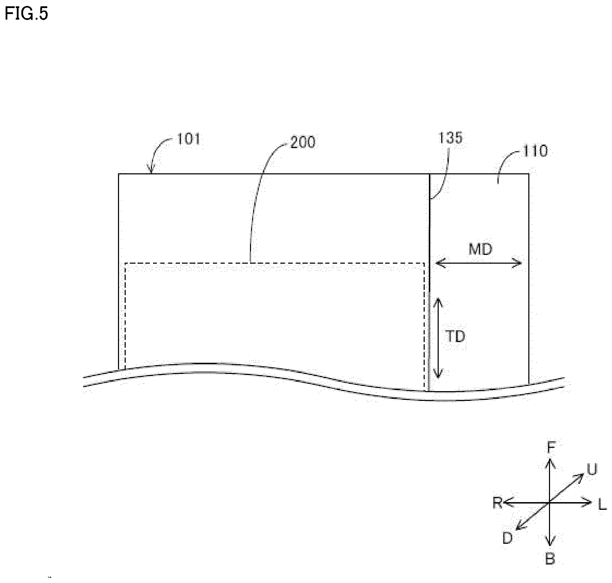

Fig. 5 shows a state in which the exterior member 101 is wound around the electrode assembly 200 in the process of manufacturing an electrical storage device 10 when viewed from the lower side. As shown in Fig. 5, in the electrical storage device 10, a direction along the side 135 is a transverse direction (TD) of the exterior member 101, and the direction orthogonally crossing the side 135 is a machine direction (MD) of the exterior member 101. That is, the direction along the side 135 is a direction (TD) orthogonally crossing the machine direction (MD) of the exterior member 101.

In the electrical storage device 10, the first sealed portion 110 is bent along the side 135, and the direction along the side 135 is a direction orthogonally crossing the machine direction of the exterior member 101. Therefore, in the electrical storage device 10, the exterior member 101 is unlikely to break even if a fold is formed in the direction orthogonally crossing the machine direction of the exterior member 101, so that it is possible to reduce the possibility that the first sealed portion 110 is broken by bending the first sealed portion 110.

The machine direction (MD) of the exterior member 101 corresponds to a rolling direction (RD) of the metal foil (aluminum alloy foil or the like) of the barrier layer in the exterior member 101. TD of the exterior member 101 corresponds to TD of the metal foil. The rolling direction (RD) of the metal foil can be identified by a rolling streak.

A plurality of cross-sections of the heat-sealable resin layer of the exterior member 101 are observed with an electron microscope to examine a sea-island structure, and a direction parallel to a cross-section having the largest average of diameters of islands in a direction perpendicular to the thickness direction of the heat-sealable resin layer (hereinafter, also referred to as a "length direction of the heat-sealable resin layer") can be determined as MD. MD can be identified by this method in the case where MD of the exterior member 101 cannot be identified by the rolling streak of the metal foil.

Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, for each island on each cross-section, the diameter d of the island is measured by the length of a straight line connecting both ends in a direction perpendicular to the thickness direction of the heat-sealable resin layer. Next, the average of the diameters d of the top 20 islands in size is calculated for each cross-section. The direction parallel to a cross-section having the largest average of the diameters d of the islands is determined as MD.

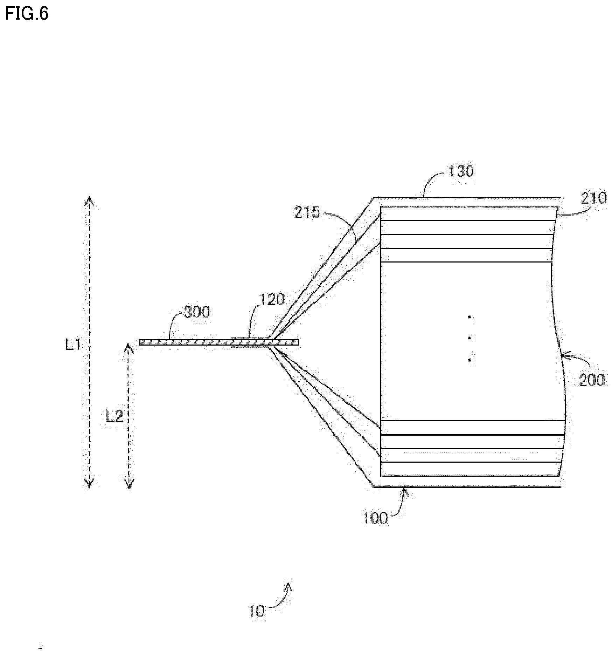

Fig. 6 schematically shows a part of a cross-section taken along VI-VI in Fig. 2. As shown in Fig. 6, a second sealed portion 120 is sealed with the outer packaging 100 sandwiching the electrode terminal 300.

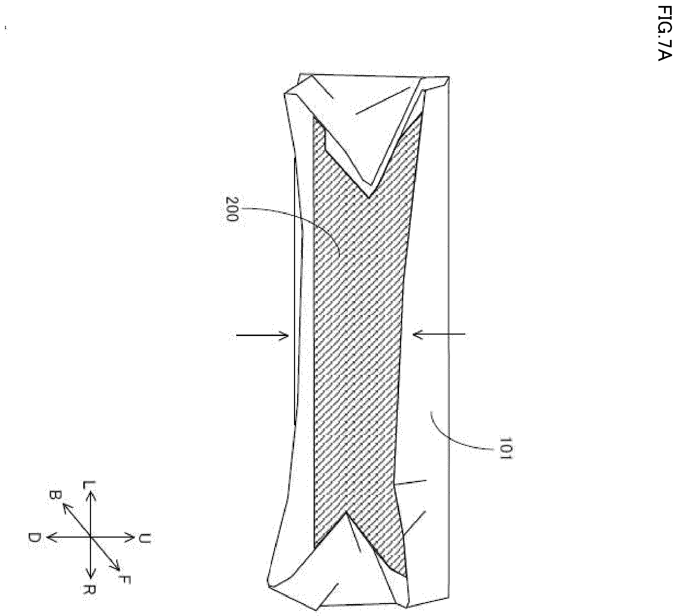

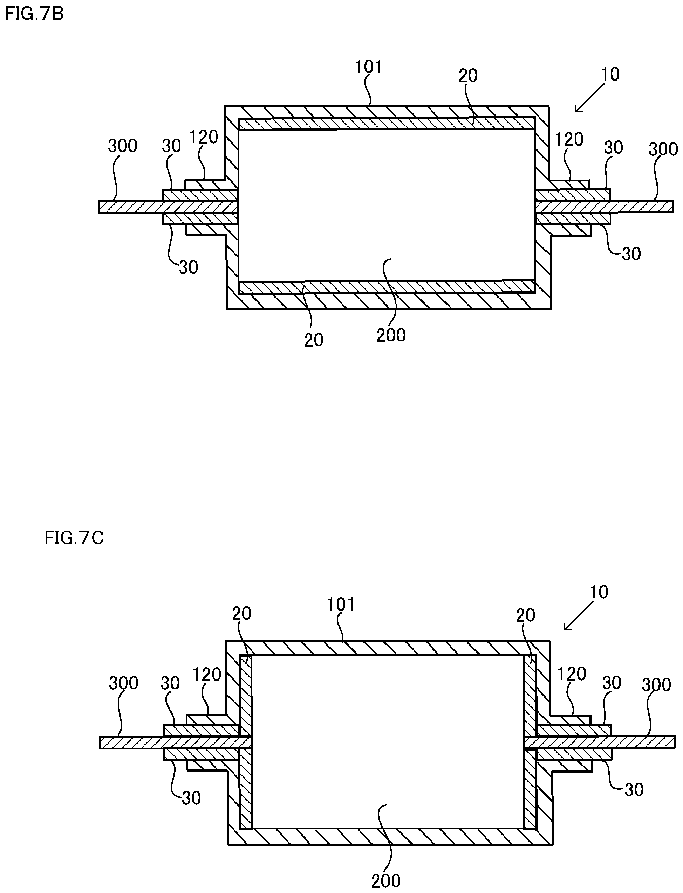

Fig. 7A is a schematic diagram for illustrating a method for forming the second sealed portion 120. The second sealed portion 120 is formed by folding the exterior member 101 as shown in Fig. 7A, and heat-sealing surfaces of the exterior member 101 (heat-sealable resin layers) which face each other. The electrode terminal 300 is located between the surfaces of the exterior member 101 which face each other (not shown in Fig. 7A). The adhesion film 30 for terminal which bonds to both metal and resin (see Figs. 7B to 7E) may be disposed between the electrode terminal 300 and the exterior member 101.

The adhesion film may include, for example, one or more resin films formed of a polyolefin-based resin or an acid-modified polyolefin-based resin obtained by graft-modification of a polyolefin-based resin with an acid such as maleic anhydride. When the adhesion film includes two or more layers, it is preferable that a resin film formed of a polyolefin-based resin is disposed on a side where the film is joined to the exterior member 101. When the adhesion film includes two or more layers, it is preferable that a resin film formed of an acid-modified polyolefin-based resin obtained by graft-modification of a polyolefin-based resin with an acid such as maleic anhydride is disposed on a side where the film is joined to the electrode terminal 300.

Referring to Fig. 6 again, the electrode assembly 200 includes a plurality of electrodes 210 (positive and negative electrodes). A current collector 215 extending from each electrode 210 is connected to the electrode terminal 300. In the electrical storage device 10, a part of the electrode terminal 300 which is located outside the outer packaging 100 is located at substantially half the thickness of the electrical storage device 10 in the thickness direction of the electrical storage device 10. That is, the length L2 is substantially half the length L1. The term "half the thickness of the electrical storage device 10" means 35% to 65% of the thickness of the electrical storage device 10.

Therefore, in the electrical storage device 10, for example, the difference between the longest and the shortest of distances between each of a plurality of electrodes 210 and the electrode terminal 300 can be reduced as compared to a case where the electrode terminal 300 is substantially identical in location to the first surface 130 in the thickness direction of the electrical storage device 10.

Ingress of moisture into the electrode assembly 200 deteriorates the performance of the electrical storage device 10. For this reason, for example, when the above-described film-shaped laminate is used as the exterior member 101, the barrier layer 101B (including, for example, a metal foil) is provided. By providing the barrier layer 101B, ingress of moisture from the outside of the barrier layer 101B can be suppressed.

However, when the heat-sealable resin layer 101C of the exterior member 101 is heat-sealed to seal the electrode assembly 200, ingress of moisture from an end surface of the heat-sealable resin layer 101C may occur because the end surface of the heat-sealable resin layer 101C is exposed to the outside.

If the heat-sealable resin layer 101C of the exterior member 101 absorbs water before the electrode assembly 200 is sealed with the exterior member 101, moisture in the heat-sealable resin layer 101C may enter the electrode assembly 200 after the electrode assembly 200 is sealed.

When the electrical storage device 10 is an all-solid-state battery, contact between moisture and a solid electrolyte contained in an element forming the all-solid-state battery may generate a gas such as hydrogen sulfide depending on the type of the solid electrolyte.

The electrical storage device 10 of the present embodiment includes a resin film 20 for electrical storage devices (hereinafter, referred to as a "film 20") for exhibiting at least one of the resistance to ingress of moisture into the electrode assembly 200 and the ability to absorb a gas generated from the electrode assembly 200, such as hydrogen sulfide. The film 20 contains at least one of a water absorbent and a gas absorbent. Hereinafter, a case where the film 20 contains at least a water absorbent may be referred to as a first mode of the film 20. A case where the film 20 contains at least a gas absorbent may be referred to as a second mode of the film 20.

In the electrical storage device 10, a position at which the film 20 is disposed can be arbitrarily selected as long as the film 20 is inside the barrier layer 101B of the exterior member 101. In the present embodiment, the term "inside the barrier layer 101B" means a side opposite to the base material layer 101A with respect to the barrier layer 101B in a direction along which the layers 101A to 101C of the exterior member 101 are laminated. By disposing the film 20 of the first mode inside the barrier layer 101B of the exterior member 101, ingress of moisture from the end part of the heat-sealable resin layer 101C of the exterior member 101 and ingress of moisture contained in the heat-sealable resin layer 101C of the exterior member 101 into the electrode assembly 200 can be suppressed. That is, in the electrical storage device 10 including the film 20 of the first mode, moisture can be inhibited from reaching the electrode assembly 200 with the film 20 absorbing and holding moisture entering from the heat-sealable resin layer 101C of the exterior member 101 because the film 20 contains a water absorbent. In addition, for example, when the electrode assembly 200 is an all-solid-state battery, a gas generated by contact between a solid electrolyte layer included as an element forming the all-solid-battery and moisture, such as hydrogen sulfide, can be absorbed by disposing the film 20 of the second mode inside the barrier layer 101B of the exterior member 101. That is, in the electrical storage device 10 including the film 20 of the second mode, a gas generated from the electrode assembly 200, such as hydrogen sulfide, can be absorbed by the film 20 because the film 20 contains a gas absorbent. Therefore, it is possible to suppress an excessive increase in the internal pressure of the outer packaging 100. Hereinafter, specific examples of disposition of the film 20 in the electrical storage device 10 will be described.

The film 20 can also be used as the heat-sealable resin layer 101C of the exterior member 101 as shown in Fig. 1B. The film 20 may be used as an adhesive layer between the barrier layer 101B and the heat-sealable resin layer 101C. The film 20 can also be used as an adhesion film interposed between the heat-sealable resin layers 101C facing each other at a location, such as that of the first sealed portion 110, where the heat-sealable resin layers 101C of the exterior member 101 are heat-sealed. When the film 20 is used as an adhesion film, the film 20 may have a function in which if the internal pressure of the outer packaging 100 is increased by generation of a gas from the electrode assembly 200, the gas is released to the outside by delaminating of a portion of the heat-sealable resin layer 101C where the film 20 is interposed.

Fig. 7B is another sectional view taken along line VI-VI in Fig. 2. In the example shown in Fig. 7B, the film 20 is disposed between the exterior member 101 and the electrode assembly 200 so as to cover substantially the entire upper surface and lower surface of the electrode assembly 200. The film 20 and the inner surface (heat-sealable resin layer 101C) of the exterior member 101 may, or are not required to, be joined.

Fig. 7C is a sectional view showing still another example taken along line VI-VI in Fig. 2. In the example shown in Fig. 7C, the film 20 is disposed between the exterior member 101 and the electrode assembly 200 so as to cover substantially the entire lateral surface of the electrode assembly 200. The film 20 and the inner surface (heat-sealable resin layer 101C) of the exterior member 101 may, or are not required to, be joined.

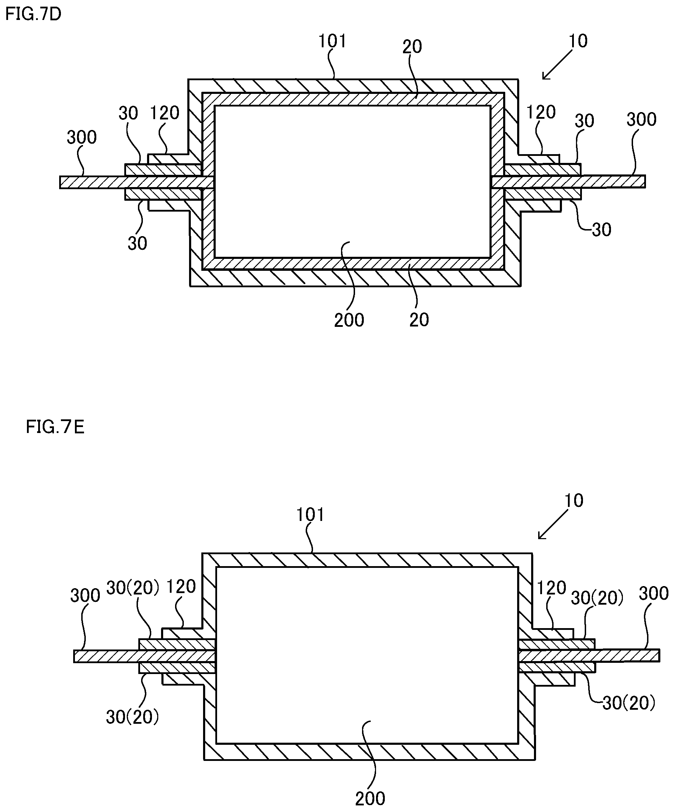

Fig. 7D is a sectional view showing still another example taken along line VI-VI in Fig. 2. In the example shown in Fig. 7D, the film 20 is disposed between the exterior member 101 and the electrode assembly 200 so as to cover substantially the entire electrode assembly 200. The film 20 and the inner surface (heat-sealable resin layer 101C) of the exterior member 101 may, or are not required to, be joined.

Fig. 7E is a sectional view showing still another example taken along line VI-VI in Fig. 2. In the example shown in Fig. 7E, the electrical storage device 10 includes an adhesion film 30 for terminal, which bonds to both metal and resin, between the electrode terminal 300 and the exterior member 101. In the example shown in Fig. 7E, the film 20 is used as the adhesion film 30 for terminal.

Since the end surface of the adhesion film 30 for terminal is exposed to the outside, moisture may enter from the end surface of the adhesion film 30 for terminal. If the adhesion film 30 for terminal absorbs water before the adhesion film 30 for terminal is interposed between the electrode terminal 300 and the exterior member 101, moisture in the adhesion film 30 for terminal may enter the electrode assembly 200 after the adhesion film 30 for terminal is interposed between the electrode terminal 300 and the exterior member 101.

By using the film 20 of the first mode as the adhesion film 30 for terminal, ingress of moisture from the end part of the adhesion film 30 for terminal and ingress of moisture contained in the adhesion film 30 for terminal into the electrode assembly 200 can be effectively suppressed. That is, in the electrical storage device 10 including the film 20 of the first mode, moisture can be inhibited from reaching the electrode assembly 200 with the film 20 absorbing and holding moisture entering from the adhesion film 30 for terminal because the film 20 contains a water absorbent. In addition, for example, when the electrode assembly 200 is an all-solid-battery, a gas generated by contact between a solid electrolyte layer included as an element forming the all-solid-state battery and moisture, such as hydrogen sulfide, can be sufficiently absorbed by using the film 20 of the second mode as the adhesion film 30 for terminal. That is, in the electrical storage device 10 including the film 20 of the second mode, a gas generated from the electrode assembly 200, such as hydrogen sulfide, can be absorbed by the film 20 because the film 20 contains a gas absorbent. Therefore, a gas such as hydrogen sulfide is hardly released to the outside.

### <1-2. Specific configuration of resin film for electrical storage devices >

**In** the first mode of the film 20, the moisture to be absorbed is moisture from gas and/or liquid. As described later, the gas absorption film according to the first mode of the present embodiment may also target a sulfur-based gas for absorption if necessary. Examples of the sulfur-based gas include hydrogen sulfide, dimethyl sulfide, methyl mercaptan, and sulfur oxide represented by SOx. The moisture to be absorbed generates various kinds of outgas when absorbed by, for example, a solid electrolyte-type lithium ion battery, and the sulfur-based gas is a component of outgas (for example, generated when the electrical storage device 10 is an all-solid-state battery using a sulfide-based inorganic solid electrolyte, or a lithium secondary battery in which lithium-sulfur is used for the positive electrode).

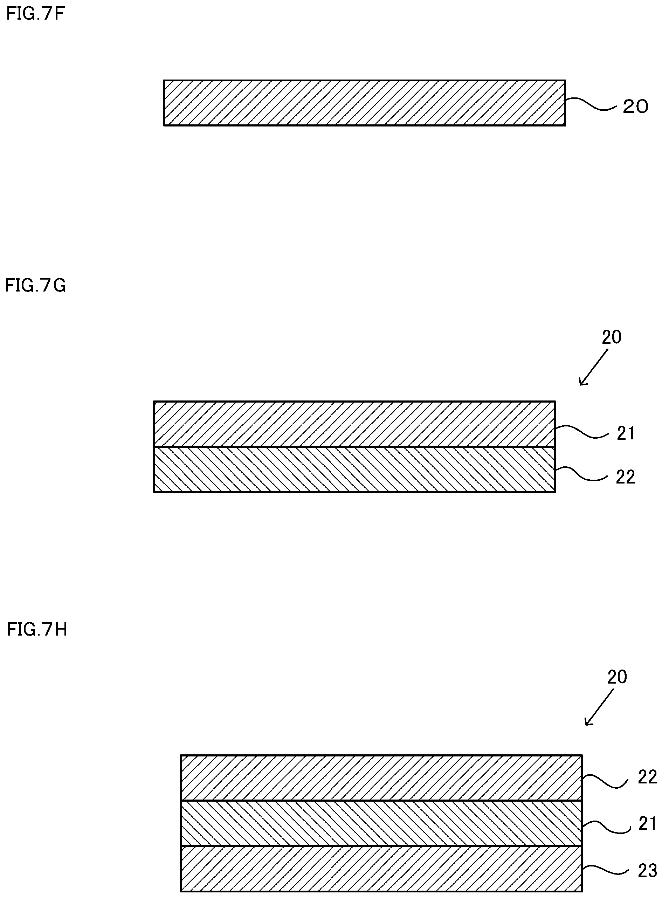

The film 20 of the present embodiment may be a single layer as shown in, for example, Fig. 7F, or may have two or more layers as shown in, for example, Figs. 7G and 7H. Fig. 7G shows a film 20 including a laminate in which a first layer 21 and a second layer 22 are laminated. Fig. 7H shows the film 20 including a laminate in which the second layer 22, the first layer 21 and a third layer 23 are laminated in the stated order.

In the first mode, when the film 20 has two or more layers, it is only necessary that at least one of the two or more layers contain a water absorbent. In the present embodiment, a layer containing a water absorbent is sometimes referred to as a "water absorbing layer". Specific examples of the laminated configuration of the film 20 according to the first mode include a laminated configuration in which the first layer 21 on the exterior member 101 side is a water absorbing layer and the second layer 22 on the electrode assembly 200 side is a layer free of a water absorbent in, for example, Fig. 7G. In addition, examples of the laminated configuration of the film 20 include a laminated configuration in which the first layer 21 located in the middle is a water absorbing layer and the second layer 22 on the electrode assembly 200 side and the third layer 23 on the exterior member 101 side are layers free of a water absorbent; and a laminated configuration in which at least one of the first layer 21 and the third layer 23 is a water absorbing layer and the second layer 22 is a layer free of a water absorbent, in, for example, Fig. 7H.

In the second mode, when the film 20 has two or more layers, it is only necessary that at least one of the two or more layers contain a gas absorbent. The gas absorbent is, for example, at least one of a sulfur-based gas absorbent, a carbon dioxide absorbent, and an oxygen absorbent. In the present embodiment, the second mode of the film 20 will be described by giving an example in which the gas absorbent is a sulfur-based gas absorbent. Specific examples of the laminated configuration of the film 20 according to the second mode include a laminated configuration in which the first layer 21 on the exterior member 101 side is a sulfur-based gas absorbing layer and the second layer 22 on the electrode assembly 200 side is a layer free of a sulfur-based gas absorbent; and a laminated configuration in which the first layer 21 on the exterior member 101 side is a layer free of a sulfur-based gas absorbing layer and the second layer 22 on the electrode assembly 200 side is a layer containing a sulfur-based gas absorbent, in, for example, Fig. 7G. **In** addition, examples of the laminated configuration of the film 20 include a laminated configuration in which the first layer 21 located in the middle is a sulfur-based gas absorbing layer and the second layer 22 on the electrode assembly 200 side and the third layer 23 on the exterior member 101 side are layers free of a sulfur-based gas absorbent; a laminated configuration in which at least one of the first layer 21 and the third layer 23 is a sulfur-based gas absorbing layer and the second layer 22 is a layer free of a sulfur-based gas absorbent; a laminated configuration in which the first layer 21 located in the middle is a layer free of a sulfur-based gas absorbing layer and the second layer 22 on the electrode assembly 200 side and the third layer 23 on the exterior member 101 side are layers containing a sulfur-based gas absorbent; and a laminated configuration in which at least one of the first layer 21 and the third layer 23 is a layer free of a sulfur-based gas absorbing layer and the second layer 22 is a layer containing a sulfur-based gas absorbent, in, for example, Fig. 7H. Since hydrogen sulfide gas is generated from the electrode assembly 200, the second layer 22 located on the electrode assembly 200 side is preferably a sulfur-based gas absorbing layer.

In the first mode, it is preferable that one surface or both surfaces of the film 20 have a heat-sealing property. When the film 20 according to the first mode is located at the second sealed portion 120 of the exterior member 101, it is preferable to enhance the heat-sealing property of the film 20. For this reason, for example, when the film 20 has three or more layers, it is preferable that the layer located at the surface (the second layer 22 and the third layer 23 in Fig. 7H) contains a heat-sealable resin. From the viewpoint of suppressing deterioration of the heat-sealing property of the layer located at the surface, the layer located at the surface is preferably free of a water absorbent (in particular, an inorganic water absorbent). In the electrical storage device 10, it is preferable that the water absorbing layer is provided between layers located at the surface from the viewpoint of further suitably exhibiting the water absorbing performance of the water absorbing layer of the film 20. This is because if the water absorbing layer 10 is located at the surface, moisture in the atmosphere is absorbed before the electrical storage device is manufactured, so that the water absorbing performance of the water absorbing layer is likely to be deteriorated. In the electrical storage device 10, it is also preferable that for the water absorbing layer, the third layer 23 located on the exterior member 101 side is a water absorbing layer. This is because the third layer 23 is close to the exterior member 101, so that moisture entering from the exterior member 101 side is easily absorbed. In the electrical storage device 10, it is also preferable that for the water absorbing layer, the second layer 22 located on the electrode assembly 200 side is a water absorbing layer. This is because the second layer 22 is close to the electrode assembly 200, so that moisture contained in the electrode assembly 200 is easily absorbed.

In the second mode, it is preferable that one surface or both surfaces of the film 20 have a heat-sealing property. When the film 20 according to the second mode is located at the second sealed portion 120 of the exterior member 101, it is preferable to enhance the heat-sealing property of the film 20. For this reason, for example, when the film 20 has three or more layers, it is preferable that the layer located at the surface (the second layer 22 and the third layer 23 in Fig. 7H) contains a heat-sealable resin. From the viewpoint of suppressing deterioration of the heat-sealing property of the layer located at the surface, the layer located at the surface is preferably free of a sulfur-based gas absorbent.

The film 20 according to the first mode may contain a sulfur-based gas absorbent described later, in addition to a water absorbent. In the present embodiment, a layer containing a sulfur-based gas absorbent is sometimes referred to as a "sulfur-based gas absorbing layer". When a sulfur-based gas absorbent is contained, the sulfur-based gas absorbent may be contained in the water absorbing layer, or may be contained in a layer free of a water absorbent. When the film 20 has two or more layers, it is preferable that the sulfur-based gas absorbent is contained in a layer free of a water absorbent and forms a sulfur-based gas absorbing layer. If a single layer contains a plurality of kinds of particles, there may be a problem that particles are hardly dispersed during formation of the film 20, so that the film is perforated, or the strength of the film 20 varies depending on a site. If the amount of particles contained in a single layer exceeds a certain level, there may be a problem that elongation or strength of the film decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

When the film 20 according to the first mode has two or more layers, specific examples of the laminated configuration of the film 20 include a laminated configuration in which the first layer 21 is a water absorbing layer and the second layer 22 is a sulfur-based gas absorbing layer in, for example, Fig. 7G. In addition, examples of the laminated configuration of the resin film 20 include a laminated configuration in which the first layer 21 is a water absorbing layer and at least one of the second layer 22 and the third layer 23 is a sulfur-based gas absorbing layer; and a laminated configuration in which at least one of the first layer 21 and the third layer 23 is a water absorbing layer and the second layer 22 is a sulfur-based gas absorbing layer, in, for example, Fig. 7H. Since hydrogen sulfide gas is generated from the electrode assembly 200, the second layer 22 located on the electrode assembly 200 side is preferably a sulfur-based gas absorbing layer. Among them, the laminated configuration in which the first layer 21 located between the second layer 22 and the third layer 23 is a water absorbing layer and the second layer 22 located on the electrode assembly 200 side is a sulfur-based gas absorbing layer is most preferable because as described above, it is preferable that the water absorbing layer is provided between layers located at the surface.

The film 20 according to the second mode may contain a water absorbent described later, in addition to a sulfur-based gas absorbent. As described above, in the present embodiment, a layer containing a water absorbent is sometimes referred to as a "water absorbing layer" as described above. When a water absorbent is contained, the water absorbent may be contained in the sulfur-based gas absorbing layer, or may be contained in a layer free of a water absorbent. When the film 20 according to the second mode has two or more layers, it is preferable that the water absorbent is contained in a layer free of a sulfur-based gas absorbent and forms a water absorbing layer. If a single layer contains a plurality of kinds of particles, there may be a problem that particles are hardly dispersed during formation of the film 20, so that the film is perforated, or the strength of the film 20 varies depending on a site. If the amount of particles contained in a single layer exceeds a certain level, there may be a problem that elongation or strength of the film decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

When the film 20 according to the second mode has two or more layers, specific examples of the laminated configuration of the film 20 include a laminated configuration in which the first layer 21 is a sulfur-based gas absorbing layer and the second layer 22 is a water absorbing layer in, for example, Fig. 7G. In addition, examples of the laminated configuration of the resin film 20 include a laminated configuration in which the first layer 21 is a sulfur-based gas absorbing layer and at least one of the second layer 22 and the third layer 23 is a water absorbing layer; and a laminated configuration in which at least one of the first layer 21 and the third layer 23 is a sulfur-based gas absorbing layer and the second layer 22 is a water absorbing layer, in, for example, Fig. 7H. In the electrical storage device 10, it is preferable that the water absorbing layer is provided between layers located at the surface from the viewpoint of further suitably exhibiting the water absorbing performance of the water absorbing layer of the film 20. This is because if the water absorbing layer 10 is located at the surface, moisture in the atmosphere is absorbed before the electrical storage device is manufactured, so that the water absorbing performance of the water absorbing layer is likely to be deteriorated. The laminated configuration in which the first layer 21 located between the second layer 22 and the third layer 23 is a water absorbing layer described later and the second layer 22 located on the electrode assembly 200 side is a sulfur-based gas absorbing layer is most preferable. In the electrical storage device 10, it is also preferable that for the water absorbing layer, the third layer 23 located on the exterior member 101 side is a water absorbing layer. This is because the third layer 23 is close to the exterior member 101, so that moisture entering from the exterior member 101 side is easily absorbed. In the electrical storage device 10, it is also preferable that for the water absorbing layer, the second layer 22 located on the electrode assembly 200 side is a water absorbing layer. This is because the second layer 22 is close to the electrode assembly 200, so that moisture contained in the electrode assembly 200 is easily absorbed.

In the present embodiment, the resin contained in the film 20 is not particularly limited as long as the effect of the present embodiment is not impaired, and for example, a thermoplastic resin is preferable, and a heat-sealable resin is more preferable. Specific examples of the resin include resins such as polyester, polyolefin, polyamide, epoxy resin, acrylic resin, fluororesin, polyurethane, silicone resin and phenol resin, and modified products of these resins. The resin for forming the film 20 may be a copolymer of these resins or a modified product of the copolymer. Further, a mixture of these resins may be used. Among them, heat-sealable resins such as polyester and polyolefin are preferable.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof. Among them, polybutylene terephthalate is particularly preferable from the viewpoint of enhancing heat resistance and pressure resistance (for example, deterioration of insulation quality (due to collapse caused by heat-sealing) in sealing of the electrode assembly 200 with the exterior member 101).

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. These polyolefin-based resins may be used alone, or may be used in combination of two or more thereof. Among them, polypropylene is particularly preferable because it is excellent in heat-sealing property.

The film 20 preferably contains a resin containing a polyolefin backbone as a main component, more preferably contains polyolefin as a main component, still more preferably contains polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesion film 20. For example, the phrase "the resin contained in the film 20 contains polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the film 20.

The resin contained in the film 20 preferably contains polyester as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesion film 20. For example, the phrase "the resin contained in the film 20 contains polyester as a main component" means that the content ratio of polyester is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the film 20.

In manufacturing of the film 20 of the present embodiment, a resin film formed in advance may be used as the film 20. A resin for forming the film 20 may be formed into a film by extrusion molding, coating or the like to obtain a resin formed of the resin film.

In the present embodiment, the film 20 may contain an elastomer. The elastomer serves to enhance the flexibility of the film 20 while securing the durability of the resin film in a high-temperature environment. The elastomer is preferably at least one thermoplastic elastomer selected from polyester-based elastomers, polyamide-based elastomers, polyurethane-based elastomers, polyolefin-based elastomers, polystyrenebased elastomers, and polyether-based elastomers, or a thermoplastic elastomer which is a copolymer of any of the foregoing elastomers. In the film 20, the content of the elastomer is not particularly limited as long as the flexibility of the film 20 can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The content ratio of the resin contained in the film 20 according to the first mode is, for example, 99.9 mass% or more, preferably 99.5 mass% or more, more preferably 99.0 mass% or more.

The content ratio of the resin contained in the film 20 according to the second mode is, for example, 50 mass% or more, preferably 55 mass% or more, more preferably 60 mass% or more.

The water absorbent contained in the film 20 according to the first mode is not particularly limited as long as it exhibits a water absorbing property in a state of being dispersed in the resin film. For example, from the viewpoint of temporal stability in the electrical storage device 10, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-state batteries, is preferably an inorganic chemical absorbent which re-releases moisture in a high-temperature range.

**In** the first mode, examples of the resin contained in the water absorbing layer include resins identical to those exemplified as resins contained in the film 20.

In the first mode, the content ratio of the resin contained in the water absorbing layer of the film 20 is, for example, 50 mass% or more, preferably 55 mass% or more, more preferably 60 mass% or more.

In the first embodiment, the content of the water absorbent contained in the film 20 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the film 20. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass. The content of the water absorbent contained in the water absorbing layer of the film 20 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the film 20 according to the first mode, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

As described above, the film 20 according to the first mode may contain a water absorbent described later, in addition to a sulfur-based gas absorbent. It is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more and 15 µm or less. If the number average particle diameter is below the above-described range, the sulfur-based gas absorbent is likely to aggregate, and if the number average particle diameter is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2,000/1.

The hydrophobic zeolite is excellent in absorbency of molecules having low polarity, such as a sulfur-based gas, and has a porous structure. In general, zeolite becomes more hydrophobic as the molar ratio of SiO₂ to Al₂O₃ increases, where SiO₂ and Al₂O₃ are constituent components of zeolite. More hydrophobic zeolite more easily absorbs molecules having low polarity, such as a sulfur-based gas, but has less affinity for molecules having high polarity, such as water, and hardly absorbs these molecules. The molar ratio of SiO₂ to Al₂O₃ of the hydrophobic zeolite is preferably 30/1 to 10,000/1, more preferably 35/1 to 9,000/1, still more preferably 40/1 to 8,500/1. Hydrophobic zeolite has high heat resistance, and thus can maintain an absorption effect even when exposed to a high temperature of 230°C or higher. In the present invention, hydrophobic zeolite having a molar ratio in the above-described range is preferably used from the viewpoint of the balance between the sulfur-based gas absorption capacity and availability.

Bentonite is an inorganic substance that contains montmorillonite, which is a clay mineral, as a main component, a large amount of layered aluminum phyllosilicate, and minerals such as quartz and feldspar as impurities. Examples of the bentonite include Na-type bentonite containing a large amount of Na⁺ ions, Ca-type bentonite containing a large amount of Ca²⁺ ions, and activated bentonite with Ca-type bentonite artificially converted into the Na-type by adding thereto several percents by weight of sodium carbonate.

Sepiolite is a clay mineral containing a hydrous magnesium silicic acid salt as a main component, and has a general chemical composition of Mg₈Si₁₂O₃₀(OH₂)₄(OH)₄·6-8H₂O, and has a porous structure. The pH (3% suspension) is preferably 8.0 to 9.0, more preferably 8.9 to 9.3 from the viewpoint of availability.

### (Chemical sulfur-based gas absorbent)

The chemical sulfur-based gas absorbent is a gas absorbent having an action of chemically absorbing and decomposing a sulfur-based gas to be absorbed. Due to chemical absorption or decomposition, there is little impact of water and the like, and once absorbed sulfur-based gas molecules are unlikely to be desorbed, so that absorption can be efficiently performed. The decomposition products are absorbed by a physical sulfur-based gas absorbent or a chemical sulfur-based gas absorbent. It is preferable that the chemical sulfur-based gas absorbent contains one or more selected from the group consisting of an inorganic substance carrying a metal oxide, glass containing a metal, and glass containing metal ions. It is preferable that the metal oxide in the inorganic substance carrying a metal oxide contains one or more selected from the group consisting of CuO, ZnO and AgO. The inorganic substance carrying a metal oxide is preferably an inorganic porous material such as zeolite. It is preferable that the metal in the glass containing a metal or the metal species of the metal ion in the glass containing metal ions contains one or more selected from the group consisting of Ca, Mg, Na, Cu, Zn, Ag, Pt, Au, Fe, Al and Ni.

In the first mode, the content of the sulfur-based gas absorbent in the film 20 is not particularly limited as long as it absorbs a sulfur-based gas, and the content of the water absorbent is preferably about 0.1 parts by mass or more, more preferably about 0.2 parts by mass or more, still more preferably about 0.3 parts by mass or more, and preferably about 30 parts by mass or less, more preferably about 27 parts by mass or less, still more preferably 25 parts by mass or less, based on 100 parts by mass of the resin contained in the film 20. The content is preferably in the range of about 0.1 to 30 parts by mass, about 0.1 to 27 parts by mass, about 0.1 to 25 parts by mass, about 0.2 to 30 parts by mass, about 0.2 to 27 parts by mass, about 0.2 to 25 parts by mass, about 0.3 to 30 parts by mass, about 0.3 to 27 parts by mass, and about 0.3 to 25 parts by mass. The content of the sulfur-based gas absorbent contained in the sulfur-based gas absorbing layer of the film 20 is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less or 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

**In** the first mode, the content ratio of the resin contained in the sulfur-based gas absorbing layer is, for example, 50 mass% or more, preferably 55 mass% or more, more preferably 60 mass% or more.

In the first mode, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 20 to 90 mass%, more preferably about 30 to 70 mass%. As long as the content is in the above-described range, it is easy to incorporate a necessary and sufficient amount of the sulfur-based gas absorbent in the sulfur-based gas absorbing layer in a dispersed state.

In the first mode, examples of the resin contained in the sulfur-based gas absorbing layer include resins identical to those exemplified as resins contained in the water absorbing layer.

When a sulfur-based gas absorbent is contained in the film 20 according to the first mode, the sulfur-based gas absorbent may be contained in the water absorbing layer or may be contained in a layer free of a water absorbent as described above. When the sulfur-based gas absorbent is contained in the water absorbing layer, the water absorbing layer also functions as a sulfur-based gas absorbing layer.

The film 20 according to the first mode may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

The thickness of the film 20 according to the first mode is not particularly limited as long as the effect of the present disclosure is exhibited, and the thickness of the film 20 is preferably about 10 µm or more, more preferably about 15 µm or more, still more preferably about 20 µm or more, and preferably about 1,000 µm or less, more preferably about 900 µm or less, still more preferably about 500 µm or less. The thickness is preferably in the range of about 10 to 1000 µm, about 10 to 900 µm, about 10 to 500 µm, about 15 to 1000 µm, about 15 to 900 µm, about 15 to 500 µm, about 20 to 1000 µm, about 20 to 900 µm, and about 20 to 500 µm.

In the first embodiment, when the film 20 has two or more layers, each layer may have a thickness such that resin film 20 has the above-described thickness. For example, the thickness of the water absorbing layer is preferably about 5 µm or more, more preferably about 6 µm or more, still more preferably about 7 µm or more, and preferably about 500 µm or less, more preferably about 400 µm or less, still more preferably about 300 µm or less. The thickness is preferably in the range of about 5 to 500 µm, about 5 to 400 µm, about 5 to 300 µm, about 6 to 500 µm, about 6 to 400 µm, about 6 to 300 µm, about 7 to 500 µm, about 7 to 400 µm, or about 7 to 300 µm. The thickness of the sulfur-based gas absorbing layer is preferably about 5 µm or more, more preferably about 7 µm or more, still more preferably about 10 µm or more, and preferably about 500 µm or less, more preferably about 400 µm or less, still more preferably about 300 µm or less. The thickness is preferably in the range of about 5 to 500 µm, about 5 to 400 µm, about 5 to 300 µm, about 7 to 500 µm, about 7 to 400 µm, about 7 to 300 µm, about 10 to 500 µm, about 10 to 400 µm, or about 10 to 300 µm.

In the second mode, it is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more, 1.0 µm or more or the like, and preferably 15 µm or less, 10 µm or less, 8 µm or less or the like. The number average particle size of the powder is preferably in the range of about 0.1 to 15 µm, about 0.1 to 10 µm, about 0.1 to 8 µm, about 1 to 15 µm, about 1 to 10 µm, or about 1 to 8 µm. If the number average particle diameter is below the above-described range, the sulfur-based gas absorbent is likely to aggregate, and if the number average particle diameter is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO2 to Al2O3 is 1/1 to 2,000/1.

Specific examples of the hydrophobic zeolite, bentonite and sepiolite are as described in the first mode, and the description thereof is omitted.

### (Chemical sulfur-based gas absorbent)

The chemical sulfur-based gas absorbent is as described in the first mode, and description thereof is omitted.

Examples of the resin contained in the sulfur-based gas absorbing layer include resins identical to those exemplified as resins contained in the film 20.

In the second mode, the content of the sulfur-based gas absorbent in the film 20 is not particularly limited as long as it absorbs a sulfur-based gas, and the content of the water absorbent is preferably about 0.1 parts by mass or more, more preferably about 0.2 parts by mass or more, still more preferably about 0.3 parts by mass or more, and preferably about 30 parts by mass or less, more preferably about 29 parts by mass or less, still more preferably 28 parts by mass or less, based on 100 parts by mass of the resin contained in the film 20. The content is preferably in the range of about 0.1 to 30 parts by mass, about 0.1 to 29 parts by mass, about 0.1 to 28 parts by mass, about 0.2 to 30 parts by mass, about 0.2 to 29 parts by mass, about 0.2 to 28 parts by mass, about 0.3 to 30 parts by mass, about 0.3 to 29 parts by mass, or about 0.3 to 28 parts by mass. The content of the sulfur-based gas absorbent contained in the sulfur-based gas absorbing layer of the film 20 is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less, still more preferably 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the second mode, the content ratio of the resin contained in the sulfur-based gas absorbing layer is, for example, 40 mass% or more, preferably 45 mass% or more, more preferably 50 mass% or more.

In the second mode, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 20 to 90 mass%, more preferably about 30 to 70 mass%. As long as the content is in the above-described range, it is easy to incorporate a necessary and sufficient amount of the sulfur-based gas absorbent in the sulfur-based gas absorbing layer in a dispersed state.

In the second mode, the film 20 may contain a water absorbent in addition to a sulfur-based gas absorbent as described above. The water absorbent contained in the film 20 is not particularly limited as long as it exhibits a water absorbing property in a state of being dispersed in the resin film. For example, from the viewpoint of temporal stability in the electrical storage device 10, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-state batteries, is preferably an inorganic chemical absorbent which re-releases moisture in a high-temperature range.

In the second mode, the content of the water absorbent contained in the film 20 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the film 20. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass. The content of the water absorbent contained in the water absorbing layer of the film 20 is not particularly limited as long as the effect of the present embodiment is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the film 20 according to the second mode, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

In the second mode, examples of the resin contained in the water absorbing layer include resins identical to those exemplified as resins contained in the film 20.

In the second mode, the content ratio of the resin contained in the water absorbing layer of the film 20 is, for example, 50 mass% or more, preferably 55 mass% or more, more preferably 60 mass% or more.

When a water absorbent is contained in the film 20 according to the second mode, the water absorbent may be contained in the sulfur-based gas absorbing layer or may be contained in a layer free of a sulfur-based gas absorbent as described above. When the water absorbent is contained in the sulfur-based gas absorbing layer, the sulfur-based gas absorbing layer also functions as a water absorbing layer.

In the second mode, the film 20 may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

In the second mode, the thickness of the film 20 is not particularly limited as long as the effect of the present disclosure is exhibited, and the thickness of the film 20 is preferably about 25 µm or more, more preferably about 30 µm or more, still more preferably about 40 µm or more, and preferably about 250 µm or less, more preferably about 240 µm or less, still more preferably about 230 µm or less. The thickness is preferably in the range of about 25 to 250 µm, about 25 to 240 µm, about 25 to 230 µm, about 30 to 250 µm, about 30 to 240 µm, about 30 to 230 µm, about 40 to 250 µm, about 40 to 240 µm, or about 40 to 230 µm.

In the second mode, when the film 20 has two or more layers, each layer may have a thickness such that resin film 20 has the above-described thickness. For example, the thickness of the sulfur-based gas absorbing layer is preferably about 10 µm or more, more preferably about 15 µm or more, still more preferably about 20 µm or more, and for example, about 100 µm or less, preferably about 95 µm or less, more preferably about 90 µm or less, still more preferably about 85 µm or less. The thickness is preferably in the range of about 10 to 100 µm, about 10 to 95 µm, about 10 to 90 µm, about 10 to 85 µm, about 15 to 100 µm, about 15 to 95 µm, about 15 to 90 µm, about 15 to 85 µm, about 20 to 100 µm, about 20 to 95 µm, about 20 to 90 µm, or about 20 to 85 µm. The thickness of the water absorbing layer is preferably about 5 µm or more, more preferably about 6 µm or more, still more preferably about 7 µm or more, and preferably about 60 µm or less, more preferably about 55 µm or less, still more preferably about 50 µm or less. The thickness is preferably in the range of about 5 to 60 µm, about 5 to 55 µm, about 5 to 50 µm, about 6 to 60 µm, about 6 to 55 µm, about 6 to 50 µm, about 7 to 60 µm, about 7 to 55 µm, or about 7 to 50 µm.

### (Method for manufacturing film 20)

In the present embodiment, the method for manufacturing the film 20 is not particularly limited as long as the film 20 is obtained, and a known or conventional film formation method and lamination method may be applied. The film 20 can be manufactured by, for example, a known film formation method and/or lamination method such as an extrusion method, a coextrusion method, a cast molding method, a T-die method, a cutting method or an inflation method. When the film 20 has two or more layers, for example, films for forming the layers, which are produced in advance, may be laminated with an adhesive agent layer interposed therebetween, a molten resin composition may be laminated by extrusion or co-extrusion on a layer formed in advance, a plurality of layers may be laminated by melting and press-bonding while being produced in parallel, or one or more resins may be applied onto another layer, and dried to perform coating.

In the first mode, a layer forming the film 20, such as a water absorbing layer (sulfur-based gas absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a water absorbing layer (or a sulfur-based gas absorbing layer), which is formed in advance, may be laminated and bonded with an adhesive layer laminated by an extrusion coating method, a dry lamination method, a non-solvent lamination method or the like. Subsequently, aging treatment may be performed if necessary.

In the first mode, for example, when a water absorbing layer or the like is laminated by an extrusion coating method, first, a resin composition for forming the layer such as a water absorbing layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer such as a water absorbing layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K7210.

In the first mode, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the second mode, a layer forming the film 20, such as a sulfur-based gas absorbing layer (water absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a sulfur-based gas absorbing layer (or a water absorbing layer), which is formed in advance, may be laminated and bonded with an adhesive layer laminated by an extrusion coating method, a dry lamination method, a non-solvent lamination method or the like. Subsequently, aging treatment may be performed if necessary.

In the second mode, for example, when a sulfur-based gas absorbing layer or the like is laminated by an extrusion coating method, first, a resin composition for forming the layer such as a sulfur-based gas absorbing layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer such as a sulfur-based gas absorbing layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K7210.

In the second mode, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the present embodiment, desired surface treatment can be applied to the surface of each layer between the layers forming the film 20 in advance if necessary for improving bondability. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

In the present embodiment, each layer forming the film 20 can be further uniaxially stretched or biaxially stretched by a heretofore known method using a tenter method, a tubular method or the like if necessary.

### <1-3. Method for manufacturing electrical storage device>

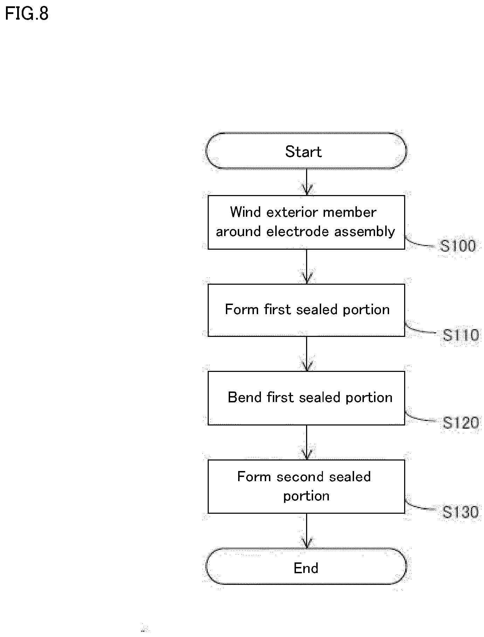

Fig. 8 is a flowchart showing a procedure for manufacturing the electrical storage device 10. The step shown in Fig. 8 is carried out by, for example, an apparatus for manufacturing the electrical storage device 10.

The manufacturing apparatus winds the exterior member 101 around the electrode assembly 200 (step S100). The manufacturing apparatus forms the first sealed portion 110 by heat-sealing surfaces of the exterior member 101 (heat-sealable resin layers) which face each other (step S110). In this way, an unfinished product shown in Figs. 4 and 5 is produced.

The manufacturing apparatus bends the first sealed portion 110 so as to bring the first sealed portion 110 into contact with the second surface 140 (step S120). The manufacturing apparatus forms the second sealed portion 120 by folding the exterior member 101 with the electrode assembly 200 housed, and heat-sealing surfaces of the exterior member 101 (heat-sealable resin layers) which face each other (step S130). In this way, the electrical storage device 10 is completed.

### <1-4. Characteristics>

In the electrical storage device 10 including the film 20 of the first mode, moisture can be inhibited from reaching the electrode assembly 200 with the film 20 absorbing and holding moisture entering from the heat-sealable resin layer 101C of the exterior member 101 because the film 20 contains a water absorbent. In the electrical storage device 10 including the film 20 of the second mode, hydrogen sulfide generated from the electrode assembly 200 can be absorbed by the film 20 because the film 20 contains a sulfur-based gas absorbent. Therefore, it is possible to suppress an excessive increase in the internal pressure of the outer packaging 100.

In the electrical storage device 10 according to the first embodiment, the first sealed portion 110 is bent toward the second surface 140 having a small area. That is, the first sealed portion 110 is not present on the first surface 130 having a large area. Therefore, even if another electrical storage device 10 is placed on the first surface 130, the other electrical storage device 10 does not tilt. As a result, the electrical storage device 10 is such that when a plurality of electrical storage devices 10 are stacked, the unevenness of the distribution of pressure applied to the electrical storage device 10 can be suppressed. In the case of use for all-solid-state batteries, it is necessary to uniformly apply a high pressure from the outer surface of the battery for exhibiting battery performance, and therefore the packaging form in the present invention is preferable. In the electrical storage device 10, the root portion of the first sealed portion 110 is located on the side 135 of the outer packaging 100. Therefore, in the electrical storage device 10, it is possible to secure a large connection width in the first sealed portion 110 as compared to a case where the root portion of the first sealed portion 110 is located on the second surface 140 when the first sealed portion 110 is placed on the second surface 140.

### [2. Second Embodiment]

In the electrical storage device 10 according to the first embodiment, the second sealed portion 120 is formed by folding the exterior member 101, and heat-sealing surfaces of the exterior member 101 which face each other. However, the shape of the second sealed portion 120 and the method for forming the second sealed portion 120 are not limited thereto. Hereinafter, mainly portions different from those in the first embodiment will be described, and portions that are the same as in the first embodiment will not be described.

### <2-1. Configuration of electrical storage device>

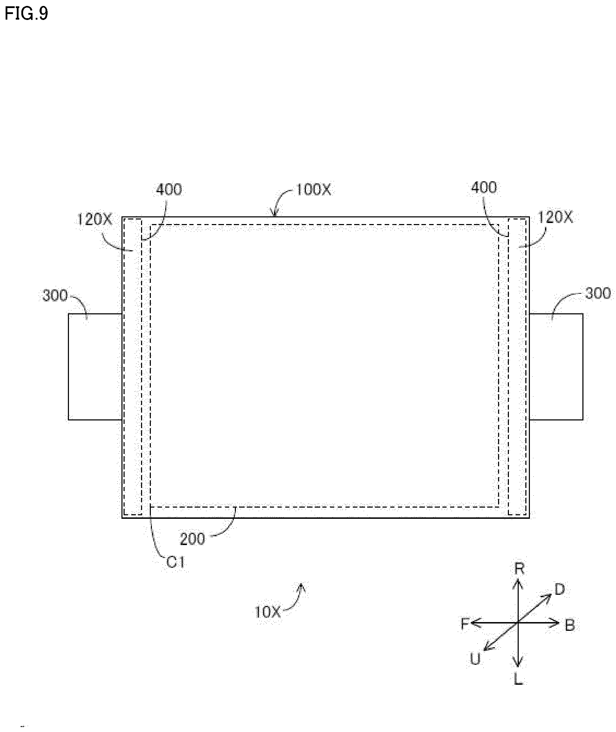

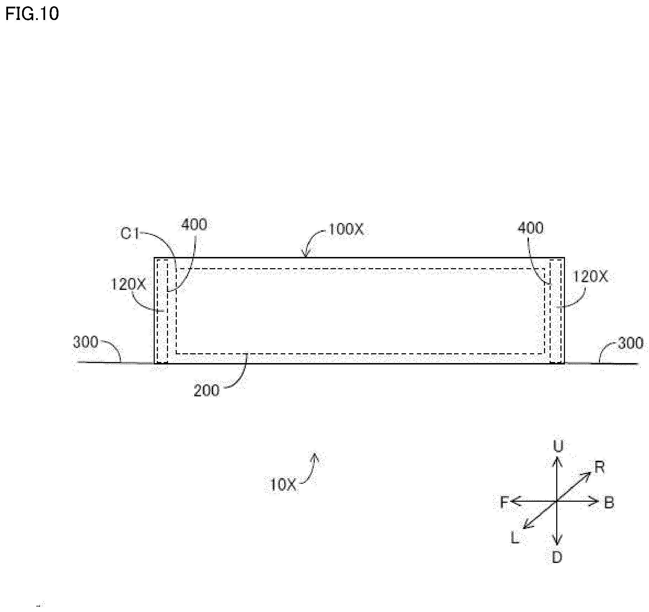

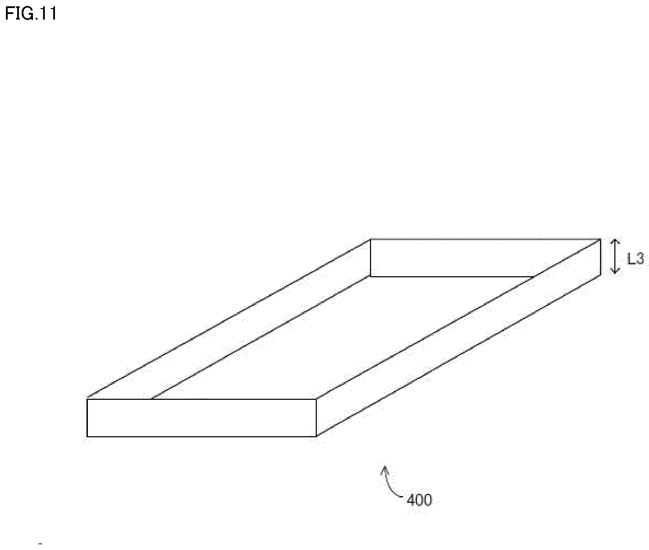

Fig. 9 is a plan view schematically showing an electrical storage device 10X according to a second embodiment. Fig. 10 is a side view schematically showing the electrical storage device 10X. Fig. 11 is a perspective view schematically showing a lid 400.

Referring to Figs. 9, 10 and 11, an outer packaging 100X is formed by fitting the lid 400 into each of openings at both ends of an exterior member 101 wound around an electrode assembly 200. A second sealed portion 120X is formed by heat-sealing an exterior member 101 and the lid 400 with the lid 400 fitted in the exterior member 101.

The lid 400 is a bottomed tray-shaped member having a rectangular shape in plan view, and is formed by, for example, cold-molding the exterior member 101. The lid 400 is not necessarily formed of the exterior member 101, and may be metal molded article, or a resin molded article. That is, the material for forming the lid 400 may contain at least one of a resin material and a metal material. For example, the lid 400 may include a main body portion including a metal material, and a cover covering a part of the main body portion and including a resin material. The cover may be a frame-shaped resin molded article, or may be an adhesive film which is suitably bonded to both a metal material and a resin material. The main body portion is preferably joined to the exterior member 101 with the cover interposed therebetween. In the electrical storage device 10X, the lid 400 is disposed so as to locate the bottom surface side of the lid 400 inside an outer packaging 100X. In the electrical storage device 10X, the bottom surface side of the lid 400 is not necessarily located inside the outer packaging 100X. In the electrical storage device 10X, the bottom surface side of the lid 400 may be located outside the outer packaging 100X. When the lid 400 is a metal molded article or a resin molded article, the material for forming the lid 400 is preferably thick enough to suppress deformation of the outer packaging 100X even if the electrical storage devices 10X are stacked on top of another. The minimum value of the thickness of the material for forming the lid 400 is, for example, 1.0 mm, more preferably 3 mm, still more preferably 4 mm. The maximum value of the thickness of the material for forming the lid 400 is, for example, 10 mm, more preferably 8.0 mm, still more preferably 7.0 mm. The maximum value of the thickness of the material for forming the lid 400 may be 10 mm or more. The thickness of the material for forming the lid 400 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present disclosure, when the lid 400 is described as a metal molded article or a resin molded article, the material for forming the lid 400 does not include a film. The film is, for example, a film defined by Japanese Industrial Standard (JIS), Packaging Terminology Standard. The film defined by JIS, Packaging Terminology Standard is a plastic film having a thickness of less than 250 µm. The thickness of the material for forming the lid 400 may vary depending on a portion of the lid 400. When the thickness of the material for forming the lid 400 varies depending on a portion of the lid 400, the thickness of the material for forming the lid 400 is defined as a thickness of the thickest portion of the lid 400.

**In** a state where the electrode assembly 200 is housed, an electrode terminal 300 protrudes to the outside of the outer packaging 100X by passing between the lid 400 and the exterior member 101. That is, the lid 400 and the exterior member 101 are heat-sealed with the electrode terminal 300 sandwiched therebetween. In the electrical storage device 10X, the location at which the electrode terminal 300 protrudes to the outside is not necessarily between the lid 400 and the exterior member 101. For example, the electrode terminal 300 may protrude to the outside from a hole formed in one of the six surfaces of the outer packaging 100X. In this case, a small gap between the outer packaging 100X and the electrode terminal 300 is filled with, for example, a resin.

In the electrical storage device 10X, the lid 400 and the electrode terminal 300 are provided separately. However, the lid 400 and the electrode terminal 300 are not necessarily provided separately. For example, the lid 400 and the electrode terminal 300 may be integrally formed.

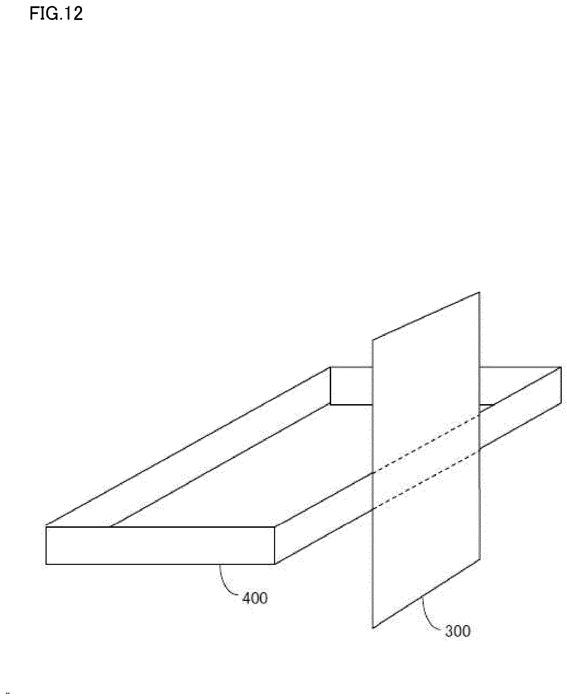

Fig. 12 shows a first example in which lid 400 and the electrode terminal 300 are integrally formed. In the first example, the electrode terminal 300 is heat-sealed to the lateral surface of the lid 400 in advance as shown in Fig. 12. For example, when the lid 400 is formed of the exterior member 101, an adhesion film which bonds to both metal and resin and described in the first embodiment may be disposed between the lid 400 and the electrode terminal 300. When the adhesion film includes two or more layers, it is preferable that a resin film formed of a polyolefin-based resin is disposed on a side where the film is joined to the lid 400. When the adhesion film includes two or more layers, it is preferable that a resin film formed of an acid-modified polyolefin-based resin obtained by graft-modification of a polyolefin-based resin with an acid such as maleic anhydride is disposed on a side where the film is joined to the electrode terminal 300.

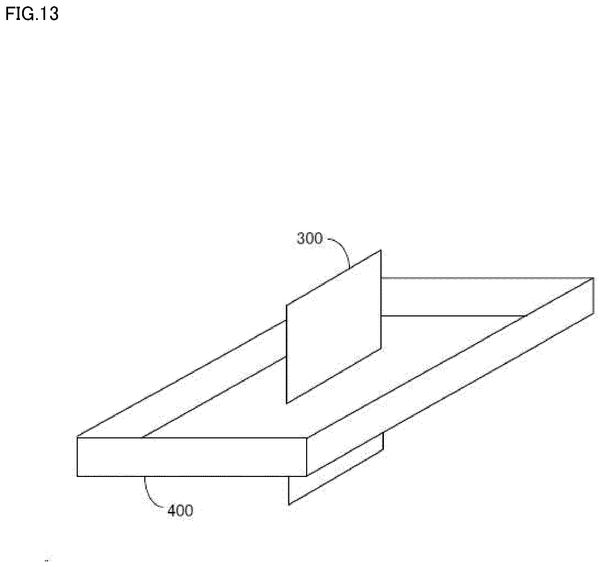

Fig. 13 shows a second example in which lid 400 and the electrode terminal 300 are integrally formed. In the second example, the electrode terminal 300 passes through a hole formed in the bottom surface portion of the lid 400 as shown in Fig. 13. A small gap in the hole of the lid 400 is filled with, for example, resin.

In the electrical storage device 10X, a gas valve may be attached at a hole formed in one of six surfaces of the second sealed portion 120X or the outer packaging 100X. The gas valve includes, for example, a check valve or a breaking valve, and is configured to ensure that if the pressure of the inside of the outer packaging 100X is increased by a gas generated in the electrical storage device 10X, the pressure is decreased.

### <2-2. Method for manufacturing electrical storage device>

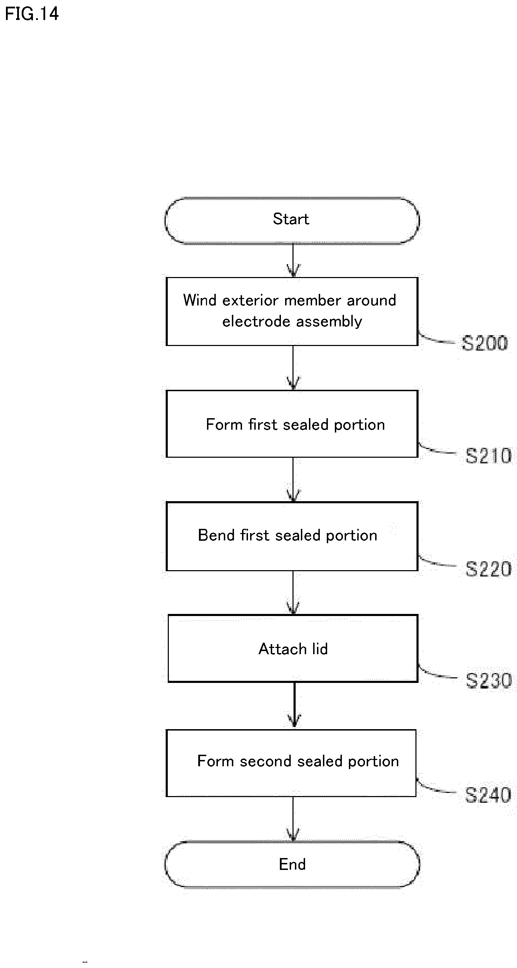

Fig. 14 is a flowchart showing a procedure for manufacturing the electrical storage device 10X. The step shown in Fig. 14 is carried out by, for example, an apparatus for manufacturing the electrical storage device 10X.

The manufacturing apparatus winds the exterior member 101 around the electrode assembly 200 (step S200). The manufacturing apparatus forms the first sealed portion 110 by heat-sealing surfaces of the exterior member 101 (heat-sealable resin layers) which face each other (step S210). In this way, an unfinished product shown in Figs. 4 and 5 is produced.

The manufacturing apparatus bends the first sealed portion 110 so as to bring the first sealed portion 110 into contact with the second surface 140 (step S220). The manufacturing apparatus houses the electrode assembly 200 in the unfinished product produced in step S220, and attaches the lid 400 at each of openings at both ends (step S230). The manufacturing apparatus forms the second sealed portion 120X by heat-sealing the exterior member 101 and the lid 400 (step S240). In this way, the electrical storage device 10X is completed.

### <2-3. Characteristics>

In the electrical storage device 10X according to the second embodiment, the first sealed portion 110 is bent toward the second surface 140 having a small area. Therefore, the electrical storage device 10X is such that when a plurality of electrical storage devices 10X are stacked, the unevenness of the distribution of pressure applied to the electrical storage device 10X can be suppressed.

### <2-4. Other characteristics>

In the electrical storage device 10X according to the second embodiment, the first sealed portion 110 is not necessarily bent toward a second surface 140 having a small area. For example, the first sealed portion 110 may be bent toward a first surface 130 having a large area. The root portion of the first sealed portion 110 is not necessarily located on a side 135 of the outer packaging 100X. The root portion of the first sealed portion 110 may be located, for example, on a surface of the outer packaging 100X excepting the lid 400. Even in this case, the electrical storage device 10X according to the second embodiment has, for example, the following characteristics.

An electrical storage device 10X includes an electrode assembly (electrode assembly 200), and an outer packaging (outer packaging 100X) which seals the electrode assembly (electrode assembly 200), the outer packaging (outer packaging 100X) including an exterior member (exterior member 101) which is wound around the electrode assembly (electrode assembly 200) and in which an opening is formed at both end parts, and a lid (lid 400) which seals the opening.

In the electrical storage device 10X, the second sealed portion 120X is not formed by heat-sealing surfaces of the exterior member 101 which face each other, unlike the first embodiment (see Fig. 7). In the electrical storage device 10X, the opening of the exterior member 101 wound around the electrode assembly 200 is sealed by the lid 400. That is, the second sealed portion 120X is formed at a portion where the lid 400 and the exterior member 101 overlap (see Figs. 9 and 10). Such a configuration enables the region of the second sealed portion 120X to be easily narrowed by adjusting the depth L3 of the lid 400 (Fig. 11).

In the electrical storage device 10X, an excessive load is not generated by sticking of a corner C1 of the electrode assembly 200 into the exterior member 101 at a location on the exterior member 101 where the exterior member 101 covers the corner C1 (Figs. 9 and 10). This is because as described above, in the electrical storage device 10X, the second sealed portion 120X is not formed by heat-sealing surfaces of the exterior member 101 which face each other, unlike the first embodiment.

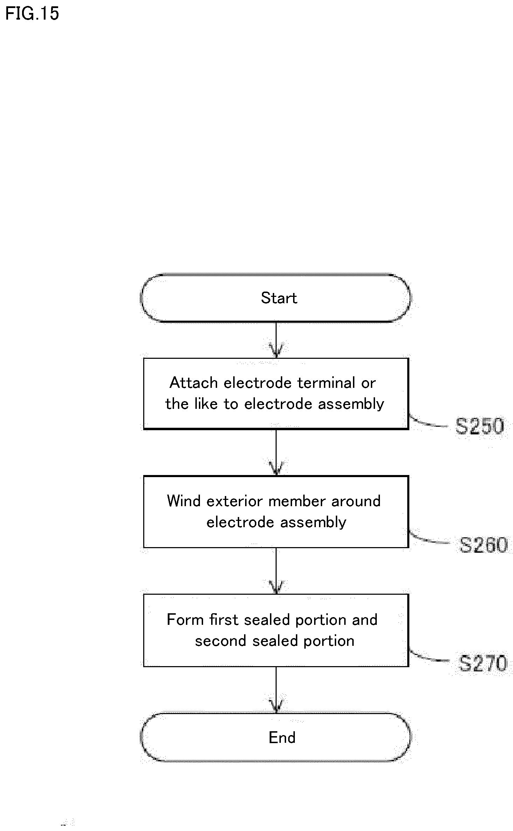

The procedure for manufacturing the electrical storage device 10X is not limited to the procedure shown in the flowchart of Fig. 14. For example, the electrical storage device 10X may be manufactured by the procedure shown in the flowchart of Fig. 15.

Fig. 15 is a flowchart showing another example of a procedure for manufacturing the electrical storage device 10X according to the second embodiment. The step shown in Fig. 15 is carried out by, for example, an apparatus for manufacturing the electrical storage device 10X. The manufacturing apparatus attaches a member in which the electrode terminal 300 and the lid 400 are integrated (for example, the member shown in Figs. 12 and 13) to the electrode assembly 200 (step S250). For example, the electrode terminal 300 is welded to the electrode assembly 200. Thereafter, the manufacturing apparatus winds the exterior member 101 around the electrode assembly 200 (step S260). The manufacturing apparatus forms the first sealed portion 110 by heat-sealing surfaces of the exterior member 101 (heat-sealable resin layers) which face each other, and the manufacturing apparatus forms the second sealed portion 120X by heat-sealing the exterior member 101 and the lid 400 (step S270). In this way, the electrical storage device 10X is completed. The electrical storage device 10X may be manufactured by such a procedure.

### [3. Third Embodiment]

In general, a step of aging the temporarily sealed electrical storage device in an environment at a predetermined temperature for a predetermined time (hereinafter, referred to as an "aging step") is carried out for the purpose of, for example, allowing an electrolytic solution to permeate the electrode assembly in a battery manufacturing process. A gas is generated from the electrode assembly 200 in the aging step, and it is necessary to discharge the gas to the outside of the battery. In the electrical storage device 10X according to the second embodiment, a mechanism for removing a gas generated in the aging step, at the final stage of manufacturing of the electrical storage device 10X is not provided. In an electrical storage device 10Y according to a third embodiment, a mechanism for removing a gas generated from an electrode assembly 200, at the final stage of manufacturing of the electrical storage device 10Y is provided. Hereinafter, mainly portions different from those in the second embodiment will be described, and portions that are the same as in the second embodiment will not be described.

### <3-1. Configuration of electrical storage device>

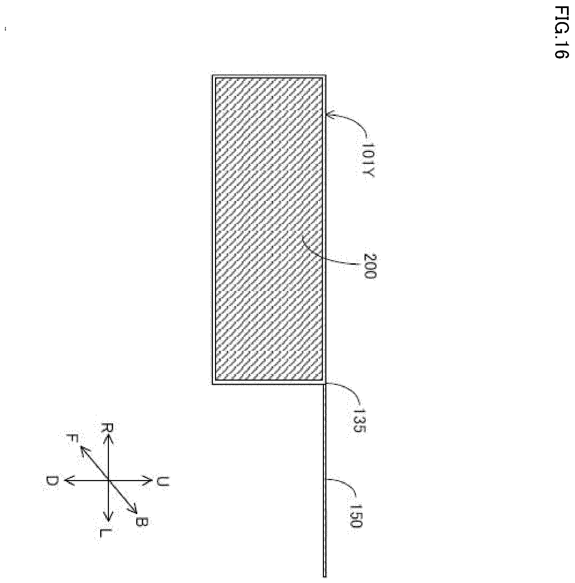

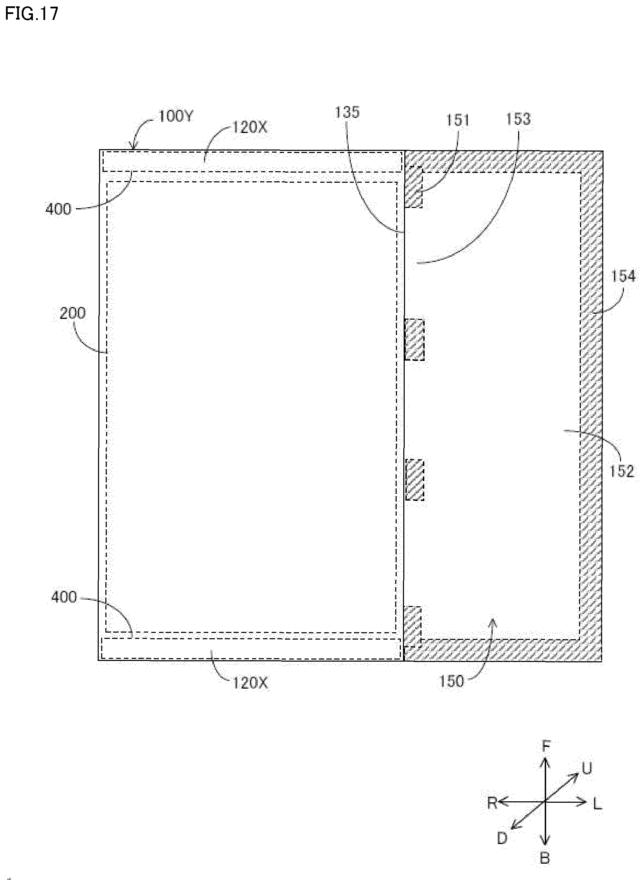

Fig. 16 shows a state in which an exterior member 101Y is wound around the electrode assembly 200 in the process of manufacturing an electrical storage device 10Y when viewed from the lateral side. Fig. 17 shows a state in which the exterior member 101Y is wound around the electrode assembly 200 and the lid 400 is attached to the exterior member 101Y in the process of manufacturing the electrical storage device 10Y when viewed from the lower side.

As shown in Figs. 16 and 17, a piece portion 150 is formed with the exterior member 101Y is wound around the electrode assembly 200. The piece portion 150 is formed by joining surfaces of the exterior member 101Y which face each other, with the exterior member 101Y wound around the electrode assembly 200. More specifically, the piece portion 150 is formed by joining (heat-sealing) peripheral edges of surfaces facing each other, with the exterior member 101Y wound around the electrode assembly 200. That is, the first sealed portion 154 is formed on the peripheral edge of the piece portion 150.

In the piece portion 150, a space 152 in which surfaces of the exterior member 101Y which face each other, are not joined is formed. In the vicinity of the side 135, joining regions 151 in which surfaces of the exterior member 101Y which face each other, are joined and non-joining regions 153 in which surfaces of the exterior member 101Y which face each other, are not joined are alternately arranged. That is, in the piece portion 150, the pattern of the joining regions 151 is formed along the side 135.

The gas generated from the electrode assembly 200 is discharged to the outside of the outer packaging 100Y by releasing the outer packaging 100Y from the sealed state by, for example, cutting off a part of the piece portion 150. Here, the gas discharged to the outside of the outer packaging 100Y is not necessarily limited to the gas generated from the electrode assembly 200, and may be a gas other than the gas generated from the electrode assembly 200, such as air, water vapor or hydrogen sulfide.

Thereafter, a portion including regions near the side 135 is heat-sealed in a band shape to bring the outer packaging 100Y into a sealed state again. In this way, the electrical storage device 10Y is completed. In the completed electrical storage device 10Y, regions where the joining force between surfaces of the exterior member 101Y which face each other is strong and regions where the joining force between the surfaces is weak are alternately arranged along the side 135 in the vicinity of the side 135. In other words, in the heat-sealed portion near the side 135, thin portions and thick portions are alternately arranged along the side 135. This is because by heat-sealing regions near the side 135 again, the non-joining region 153 is single-sealed, and the joining region 151 is double-sealed.

### <3-2. Method for manufacturing electrical storage device>

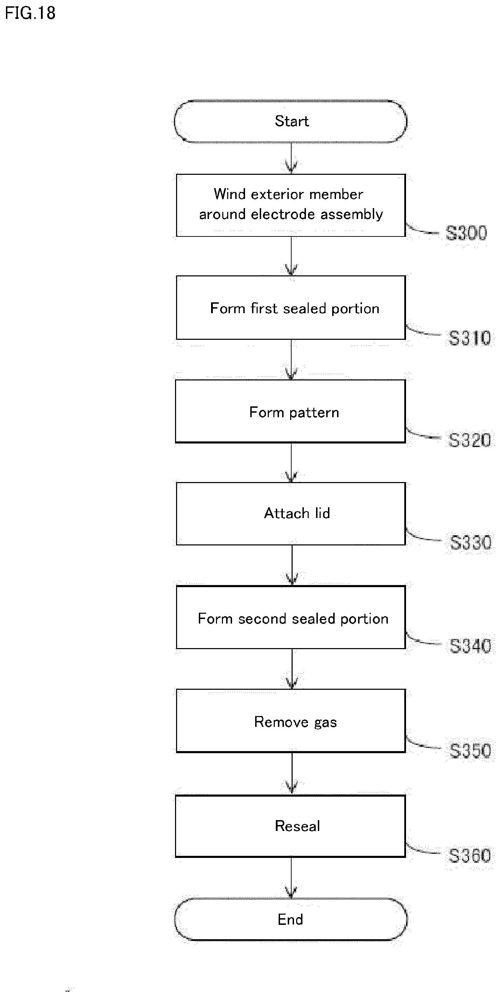

Fig. 18 is a flowchart showing a procedure for manufacturing the electrical storage device 10Y. The step shown in Fig. 18 is carried out by, for example, an apparatus for manufacturing the electrical storage device 10Y.

The manufacturing apparatus winds the exterior member 101Y around the electrode assembly 200 (step S300). The manufacturing apparatus forms the first sealed portion 154 by heat-sealing the peripheral edges of surfaces of the exterior member 101Y (heat-sealable resin layers) which face each other (step S310). The manufacturing apparatus forms a pattern of the joining regions 151 by heat-sealing surfaces of the exterior member 101Y which face each other, in the vicinity of the side 135 (step S320).

The manufacturing apparatus attaches the lid 400 at each of the openings on both ends with the electrode assembly 200 housed in the unfinished product produced in step S320 (step S330). The manufacturing apparatus forms the second sealed portion 120X by heat-sealing the exterior member 101Y and the lid 400 (step S340). Thereafter, an aging step is carried out.

The manufacturing apparatus removes a gas generated in the aging process by, for example, cutting off the piece portion 150 (step S350). The manufacturing apparatus heat-seals a portion of the piece portion 150, which includes the joining region 151, in a band shape and the manufacturing apparatus seals the outer packaging 100Y again by removing the end edge portion (step S360). Thereafter, the piece portion 150 is bent toward the second surface 140 to complete the electrical storage device 10Y.

### <3-3. Characteristics>

In the electrical storage device 10Y according to the third embodiment, the piece portion 150 including the first sealed portion 154 is bent toward the second surface 140 having a small area. Therefore, the electrical storage device 10Y ensures that when a plurality of electrical storage devices 10Y are stacked, the unevenness of the distribution of pressure applied to the electrical storage device 10Y can be suppressed. In the case of use for all-solid-state batteries, it is necessary to uniformly apply a high pressure from the outer surface of the battery for exhibiting battery performance, and therefore the packaging form in the present invention is preferable.

### [4. Fourth Embodiment]

In the electrical storage device 10X according to the second embodiment, the location at which the electrode terminal 300 protrudes to the outside is between the lid 400 and the exterior member 101. However, the position where the electrode terminal 300 protrudes to the outside is not limited thereto. Hereinafter, mainly portions different from those in the second embodiment will be described, and portions that are the same as in the second embodiment will not be described.

### <4-1. Configuration of electrical storage device>

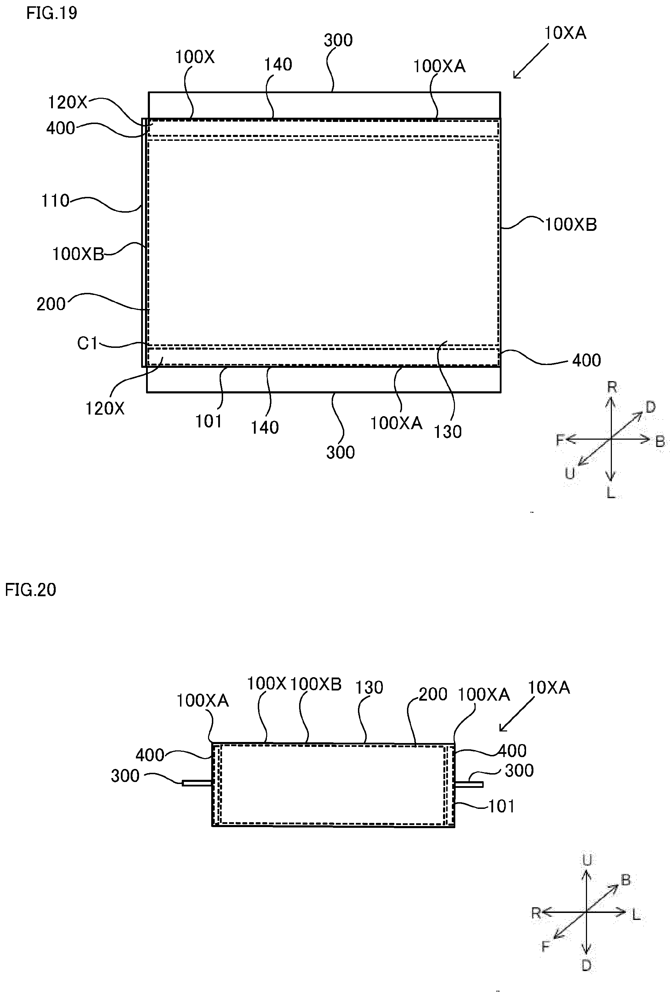

Fig. 19 is a plan view schematically showing an electrical storage device 10XA according to a fourth embodiment. Fig. 20 is a side view schematically showing the electrical storage device 10XA. An outer packaging 100X of the electrical storage device 10XA includes a pair of long sides 100XA and a pair of short sides 100XB in plan view. The outer packaging 100X is formed by fitting a lid 400 into each of openings which are along the long side 100XA of an exterior member 101 wound around an electrode assembly 200. A second sealed portion 120X is formed by heat-sealing an exterior member 101 and the lid 400 with the lid 400 fitted in the exterior member 101. A through-hole (not shown) is formed in the lid 400. Two electrode terminals 300 protrude from the through-hole of the lid 400 to the outside of the outer packaging 100X. The two electrode terminals 300 have a shape such that they are along the long side 100XA of the outer packaging 100X. A small gap between the through-hole and the electrode terminal 300 is filled with, for example, resin. In the fourth embodiment, the first sealed portion 110 is formed on one of the pair of short sides 100XB.

In the thickness direction of the electrical storage device 10XA (direction along arrow UD), a location on the lid 400 where the electrode terminal 300 protrudes can be arbitrarily selected. In the fourth embodiment, the electrode terminal 300 protrude from substantially the center of the lid 400 to the outside of the outer packaging 100X in the thickness direction of the electrical storage device 10XA as shown in Fig. 20. The length of the electrode terminal 300 in the depth direction of the electrical storage device 10XA (direction along arrow FB) can be arbitrarily selected. In the fourth direction, the length of the electrode terminal 300 in the depth direction of the electrical storage device 10XA (direction along arrow FB) is substantially the same as the length of the electrode assembly 200.

### <4-2. Characteristics>

In the electrical storage device 10XA according to the fourth embodiment, the electrode terminal 300 that is larger in size can be used because the electrode terminal 300 is disposed along the long side 100XA which is large in length in the depth direction. Therefore, it is possible to provide the high-powered electrical storage device 10XA.

### [5. Modification]

The above-described embodiments are an example of possible forms of an electrical storage device according to the present invention, and is not intended to limit the form thereof. The electrical storage device according to the present invention may have a form different from that exemplified in each of the embodiments. An example thereof is a form in which a part of the configuration of any of the embodiments is replaced, changed or omitted, or a form in which a new configuration is added to any of the embodiments. Some examples of modifications of the embodiments will be described below. Note that the above embodiments can be combined as long as they are not technically contradictory.

<5-1>
In the first to fourth embodiments, one exterior member is wound around the electrode assembly 200. However, the number of exterior members wound around the electrode assembly 200 is not necessarily 1. For example, two or more exterior members may be wound around the electrode assembly 200.

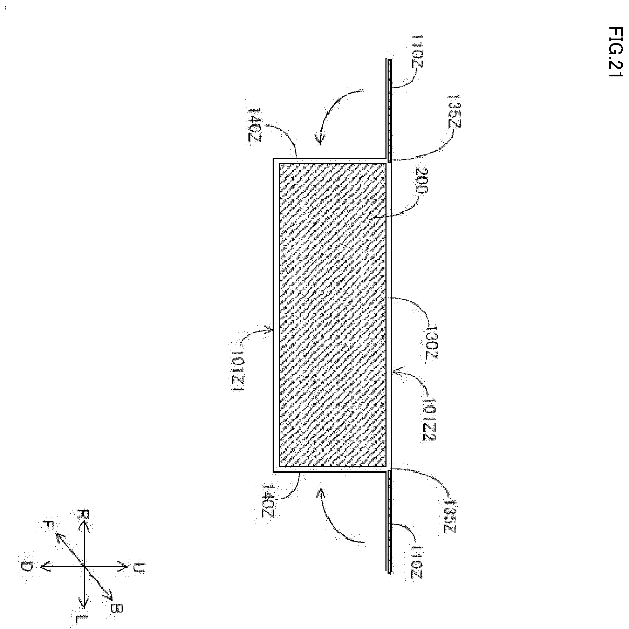

Fig. 21 shows a state in which exterior members 101Z1 and 101Z2 are wound around the electrode assembly 200 in the process of manufacturing an electrical storage device in a modification when viewed from the lateral side. As shown in Fig. 21, the periphery of the electrode assembly 200 is covered with the exterior members 101Z1 and 101Z2. The first sealed portion 110Z is formed by joining surfaces of the exterior members 101Z1 and 101Z2 which face each other. In this example, the first sealed portions 110Z are bent toward a second surface 140Z side instead of a first surface 130Z. Such a configuration also enables exhibiting an effect in which when a plurality of electrical storage devices are stacked, the unevenness of the distribution of pressure applied to the electrical storage device can be suppressed. In the case of use for all-solid-state batteries, it is necessary to uniformly apply a high pressure from the outer surface of the battery for exhibiting battery performance, and therefore the packaging form in the present invention is preferable. In this example, the first sealed portions 110Z are not necessarily bent. In this modification, the sealed portions 110Z may be sealed with a part of the electrode terminal 300 sandwiched therebetween. Further, in this modification, the first sealed portions 110Z are not required to be formed on the side 135Z, and may protrude to the outside from substantially the center of the second surface 140Z in the thickness direction of the electrical storage device.

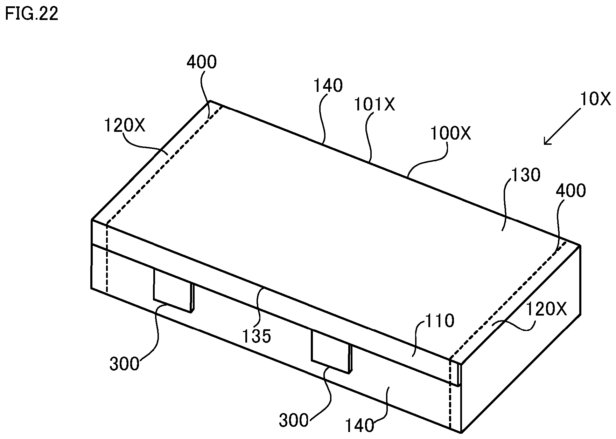

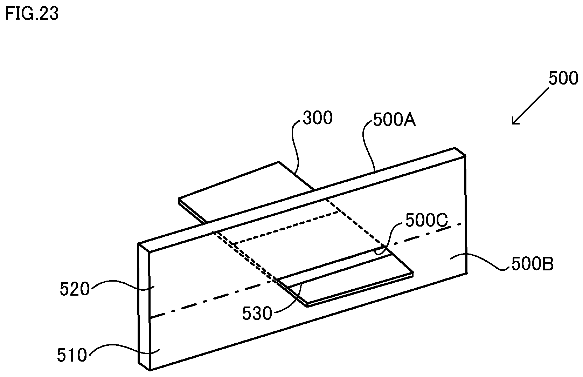

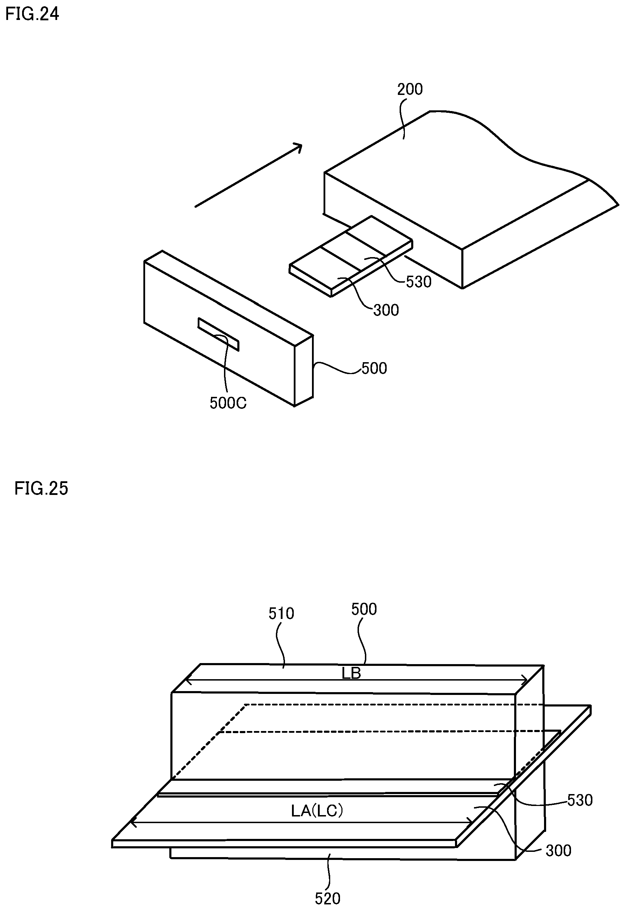

<5-2>
   In the first to fourth embodiments, the electrode assembly 200 is a so-called stack-type electrode assembly which is formed by laminating a plurality of electrodes 210, but the form of the electrode assembly 200 is not limited thereto. The electrode assembly 200 may be, for example, a so-called winding-type electrode assembly which is formed by winding a positive electrode and a negative electrode with a separator interposed therebetween. The electrode assembly 200 may be formed by laminating a plurality of so-called winding-type electrode assemblies.
<5-3>
   In the first to fourth embodiments, the second surface 140 is a flat surface extending downward from the first surface 130 at substantially a right angle with respect to the first surface 130. However, the form of the second surface 140 is not limited thereto. For example, the electrode assembly 200 is a winding-type electrode assembly, and a flat surface and a curved surface are formed on the outer periphery thereof. Here, the area of the flat surface is larger than the area of the curved surface, the first surface 130 covers the flat surface of the electrode assembly, and the second surface 140 covers the curved surface of the electrode assembly. In this case, the second surface 140 may be formed by a curved surface. In this case, a boundary portion from which the second surface 140 extends downward from the first surface 130 is the side 135.
<5-4>
   In the third embodiment, the joining region 151 is formed at four positions. However, the number of positions at which the joining region 151 is formed is not limited thereto. For example, the joining region 151 may be formed at two positions near both ends in the direction of the side 135, or only at one position near the center of the side 135, or may be formed at five or more positions.
<5-5>
   In the second embodiment, the electrode terminal 300 is disposed in the second sealed portion 120X, but the location on the outer packaging 100X where the electrode terminal 300 is disposed is not limited thereto. For example, in the second embodiment, the electrode terminal 300 can be disposed in the first sealed portion 110 as shown in Fig. 22. In other words, the first sealed portion 110 is sealed with the electrode terminal 300 sandwiched therein. In this modification, at least one of the two electrode terminals 300 may be bent toward the second surface 140, may be bent toward a side opposite to the second surface 140, or is not required to be bent so as to protrude outward from the side 135. In this modification, the sealing property of the outer packaging 100X is improved because the electrode terminal 300 and the first sealed portion 110 are easily sealed. The electrode assembly 200 can be easily housed in the outer packaging 100X. In this modification, for example, the lid 400 is fitted into each of the openings at both ends of the exterior member 101X as in the second embodiment. A second sealed portion 120 is formed by heat-sealing an exterior member 101X and the lid 400 with the lid 400 fitted in the exterior member 101X. Even in the first embodiment, the electrode terminal 300 may be disposed in the first sealed portion 110.
<5-6>
   In the second embodiment, the configuration of the lid 400 can be arbitrarily changed. Fig. 23 is a perspective view showing a lid 500 which is a modification of the lid 400. The lid 500 has, for example, a plate shape, and includes a first surface 500A facing the electrode assembly 200 (see Fig. 9) and a second surface 500B on a side opposite to the first surface 500A. A hole 500C bored through the first surface 500A and the second surface 500B is formed at the center of the lid 500. The material for forming the lid 500 includes, for example, a resin material. The lid 500 may include a metal material. That is, the material for forming the lid 500 may include at least one of a resin material and a metal material. For example, the lid 500 may include a main body portion including a metal material, and a cover covering a part of the main body portion and including a resin material. The cover may be a frame-shaped resin molded article, or may be an adhesive film which is suitably joined to both a metal material and a resin material. The main body portion is preferably joined to the exterior member 101 with the cover interposed therebetween. In this modification, it is preferable that an adhesion film 530 for terminal which bonds to both the electrode terminal 300 and the lid 500 is attached to a predetermined region including a portion of the electrode terminal 300 which is joined to the lid 500. The specifications about the adhesion film 530 for terminal are similar to the specifications about the adhesion film 30 for terminal which is described in the first embodiment. In this modification, the method for manufacturing the electrical storage device 10X may include the steps of: electrically connecting the electrode assembly 200 and the electrode terminal 300; manufacturing the lid 500; and inserting the electrode terminal 300 connected to the electrode assembly 200 into the hole 500C of the lid 500 (see Fig. 24, hereinafter referred to as an "insertion step").

When the lid 500 has a plate shape, the lid 500 is preferably thick enough to suppress deformation of the outer packaging 100X even if electrical storage devices 10X are stacked on top of another. From another point of view, when the lid 500 has a plate shape, the lateral surface of the lid 500 is preferably thick enough to ensure that the lateral surface of the lid 500 and the exterior member 101X can be suitably heat-sealed in formation of the second sealed portion 120X. The minimum value of the thickness of the lid 500 is, for example, 1.0 mm, more preferably 3 mm, still more preferably 4 mm. The maximum value of the thickness of the lid 500 is, for example, 10 mm, more preferably 8.0 mm, still more preferably 7.0 mm. The maximum value of the thickness of the lid 500 may be 10 mm or more. The thickness of the material for forming the lid 500 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present disclosure, when the lid 500 is described as having a plate shape, the material for forming the lid 500 does not include a film defined by Japanese Industrial Standard (JIS), Packaging Terminology Standard. The thickness of the lid 500 may vary depending on a portion of the lid 500. When the thickness of the lid 500 varies depending on a portion, the thickness of the thickest portion of the lid 500 is defined as a thickness of the lid 500.

The lid 500 may be composed of a member divided into a first portion 510 and a second portion 520, and may be manufactured by joining the first portion 510 and the second portion 520 such that the electrode terminal 300 and the adhesion film 530 for terminal are sandwiched therebetween. In these modifications, when a gap is generated between the adhesion film 530 for terminal and the hole 530C, the gap is preferably filled, for example, with a resin material such as hot melt or by resin welding.

When the lid 500 is composed of a member divided into the first portion 510 and the second portion 520, the relationship between the width of the electrode terminal 300, LA and the width of the lid 500, LB can be arbitrarily selected. From the viewpoint of more firmly joining the electrode terminal 300 and the lid 500, the ratio of the width LA to the width LB, RA is preferably 50% or more. In the example shown in Fig. 25, the width LA and the width LB are substantially equal, in other words, the ratio RA is 100%. A ratio RA of 50% or more leads to an increased area of a portion of the electrode terminal 300, which is joined to the lid 500, so that the electrode terminal 300 and the lid 500 can be more firmly joined by heating the electrode terminal 300. In this modification, the width of the adhesion film 530 for terminal, LC is preferably substantially equal to the width of the electrode terminal 300, LA.

The lid 500 may be manufactured by performing insert molding of the lid 500 on the electrode terminal 300 to which the adhesion film 530 for terminal is attached. The method for manufacturing the electrical storage device 10X in this case includes the steps of: electrically connecting the electrode assembly 200 and the electrode terminal 300; and performing insert molding of the lid 500 on the electrode terminal 300 connected to the electrode assembly 200 (hereinafter referred to as an "insert molding step"). After the insert molding step, the exterior member 101 is wound around the electrode assembly 200 and the lid 500. In the insert molding step, a thermal insulation material for protecting the electrode assembly 200 is preferably disposed between the electrode assembly 200 and a portion where the lid 500 is formed. The thermal insulation material is preferably removed after the insert molding step.

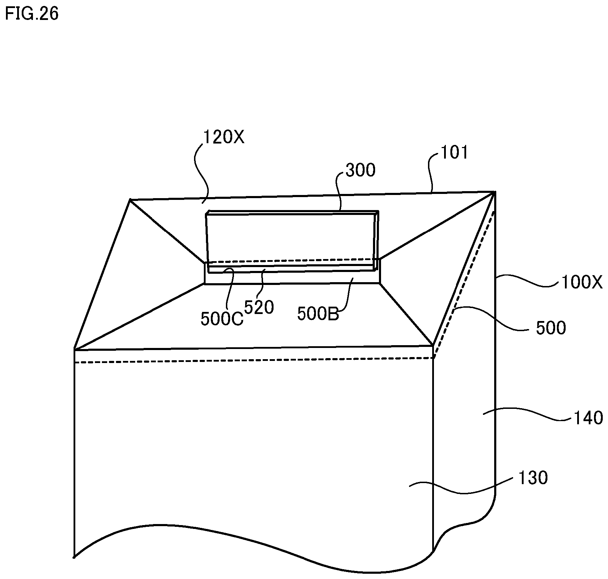

In these modifications, the second sealed portion 120X may be formed by joining the exterior member 101 and the second surface 500B of the lid 500 with the lid 500 fitted in the outer packaging 100X as shown in Fig. 26. The means for joining the exterior member 101 and the second surface 500B of the lid 500 is, for example, heat-sealing. In this modification, the sealing property of the outer packaging 100X is improved because the exterior member 101 is joined to a wider region of the lid 500. The second sealed portion 120X may be formed by forming the lid by bending the adhesion film 530 for terminal, and joining an arbitrary portion of the adhesion film 530 for terminal and the exterior member 101X. In these modifications, a barrier layer is preferably laminated on at least a part of the surface of the lid 500. Alternatively, when the lid 500 includes a plurality of layers, a barrier layer may be formed on an arbitrary layer. The material for forming the barrier layer is, for example, aluminum, steel sheet, or stainless steel.

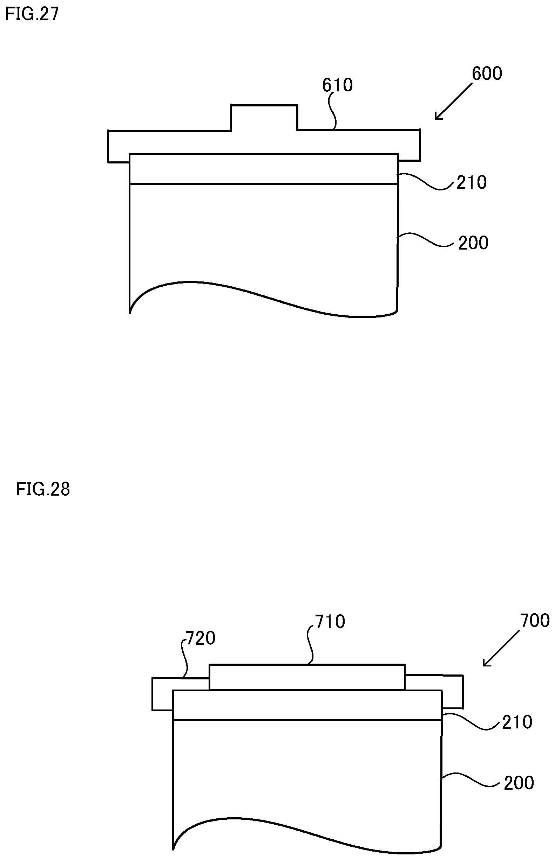

Fig. 27 is a front view of a lid 600 which is another modification of the lid 400 in the second embodiment. The lid 600 includes a metal portion 610 which is a portion where a metal is exposed on the surface, and the metal portion 610 and the electrode 210 of the electrode assembly 200 are welded. The entire lid 600 may be composed only of the metal portion 610, or the metal portion 610 may form a part of the lid 600. When the metal portion 610 forms a part of the lid 600, the lid 600 is composed of a material having a multi-layered structure with a metal layer. When the lid 600 is composed of a material having a multi-layered structure with a metal layer as an intermediate layer, the metal portion 610 is a portion where layers other than the metal layer are partially removed so that the metal layer is exposed. In the example shown in Fig. 27, a space between the lid 600 and the electrode 210 is not necessary because the metal portion 610 of the lid 600 functions as an electrode terminal. Therefore, the electrical storage device 10X (see Fig. 9) can be downsized.

Fig. 28 is a front view of a lid 700 which is another modification of the lid 400 in the second embodiment. The lid 700 includes a metal portion 710 composed of a metal material, and a non-metal portion 720 connected to the metal portion 710 and composed of a resin material. The metal portion 710 is welded to the electrode 210 of the electrode assembly 200. In the example shown in Fig. 28, a space between the lid 700 and the electrode 210 is not necessary because the metal portion 710 of the lid 700 functions as an electrode terminal. Therefore, the electrical storage device 10X (see Fig. 9) can be downsized.

<5-7>
The electrical storage device 10X of the second embodiment or a modification of the second embodiment may include the film 20 described in the first embodiment. In the electrical storage device 10X, a position at which the film 20 is disposed can be arbitrarily selected as long as the film 20 is inside the barrier layer 101B (see Fig. 2) of the exterior member 101. By disposing the film 20 of the first mode inside the barrier layer 101B of the exterior member 101, ingress of moisture from the end part of the heat-sealable resin layer 101C of the exterior member 101 and ingress of moisture contained in the heat-sealable resin layer 101C of the exterior member 101 into the electrode assembly 200 can be suppressed. That is, in the electrical storage device 10X including the film 20 of the first mode, moisture can be inhibited from reaching the electrode assembly 200 with the film 20 absorbing and holding moisture entering from the heat-sealable resin layer 101C of the exterior member 101 because the film 20 contains a water absorbent. In addition, for example, when the electrode assembly 200 is an all-solid-battery, a gas generated by contact between a solid electrolyte layer included as an element forming the all-solid-state battery and moisture, such as hydrogen sulfide, can be absorbed by disposing the film 20 of the second mode inside the barrier layer 101B of the exterior member 101. That is, in the electrical storage device 10X including the film 20 of the second mode, a gas generated from the electrode assembly 200, such as hydrogen sulfide, can be absorbed by the film 20 because the film 20 contains a gas absorbent.

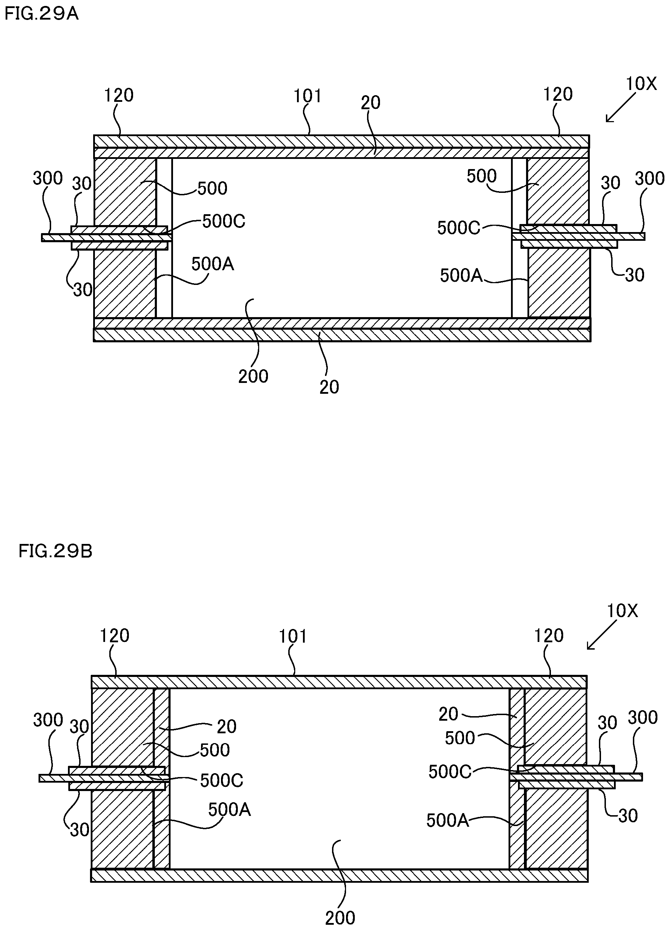

Fig. 29A is a cross-sectional view showing a modification of the electrical storage device 10X of the second embodiment. In the example shown in Fig. 29A, the film 20 is disposed between the exterior member 101 and the electrode assembly 200 so as to cover substantially the entire upper surface and lower surface of the electrode assembly 200. The film 20 and the inner surface (heat-sealable resin layer 101C) of the exterior member 101 may, or are not required to, be joined. At least a part of the film 20 may be disposed between the exterior member 101 and the lid 500.

Fig. 29B is a cross-sectional view showing another modification of the electrical storage device 10X of the second embodiment. In the example shown in Fig. 29B, the film 20 is disposed between the lid 500 and the electrode assembly 200 so as to cover substantially the entire lateral surface of the electrode assembly 200. The film 20 and the first surface 500A of the lid 500 may, or are not required to, be joined. The film 20 and the first surface 500A of the lid 500 may be in contact with each other, or may be separate from each other. The film 20 may be disposed between the exterior member 101 and the electrode assembly 200 so as to cover substantially the entire electrode assembly 200. The film 20 and the inner surface (heat-sealable resin layer 101C) of the exterior member 101 may, or are not required to, be joined.

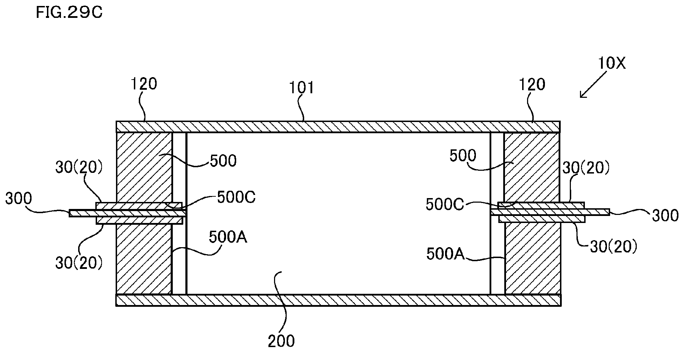

Fig. 29C is a cross-sectional view showing another modification of the electrical storage device 10X of the second embodiment. In the example shown in Fig. 29C, the electrical storage device 10X includes an adhesion film 530 for terminal, which bonds to both metal and resin, between the electrode terminal 300 and the lid 500. In the example shown in Fig. 29C, the film 20 is used as the adhesion film 530 for terminal. The film 20 is preferably disposed at least in a hole 500C of the lid 500. The film 20 may be exposed from the 500C of the lid 500. In the electrical storage device 10X including the lid 500, moisture may enter from the hole 500C of the lid 500. In the electrical storage device 10X including the film 20 of the first mode, moisture can be inhibited from reaching the electrode assembly 200 with the film 20 absorbing and holding moisture entering from the hole 500C of lid 500 because the film 20 contains a water absorbent. In the electrical storage device 10X including the film 20 of the second mode, a gas generated from the electrode assembly 200, such as hydrogen sulfide, can be absorbed by the film 20 because the film 20 contains a gas absorbent. Therefore, a gas such as hydrogen sulfide is hardly released to the outside through the hole 500C of the lid 500.

When the lid 500 is composed of a member divided into at least the first portion 510 and the second portion 520 as shown in Fig. 23, the film 20 may be disposed in at least a part of the region between the first portion 510 and the second portion 520. For example, when the lid 500 is composed of one part, and the electrode terminal 300 is disposed between the top surface of the lid 500 and the exterior member 101, the film 20 as an adhesion film 530 for terminal may be disposed between the top surface of the lid 500 and the exterior member 101.

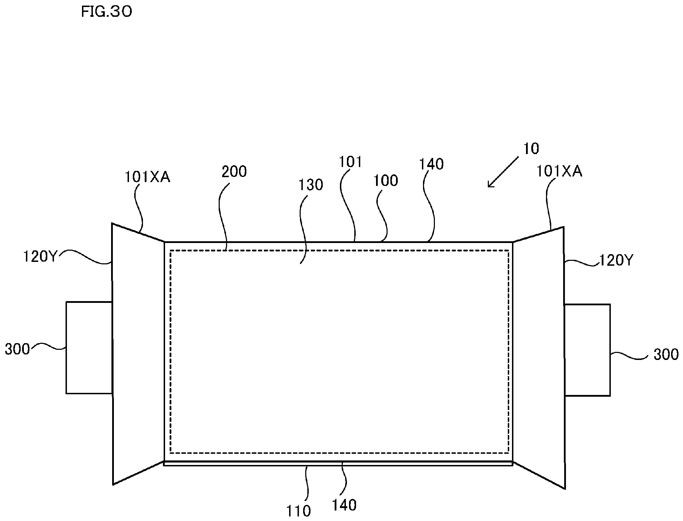

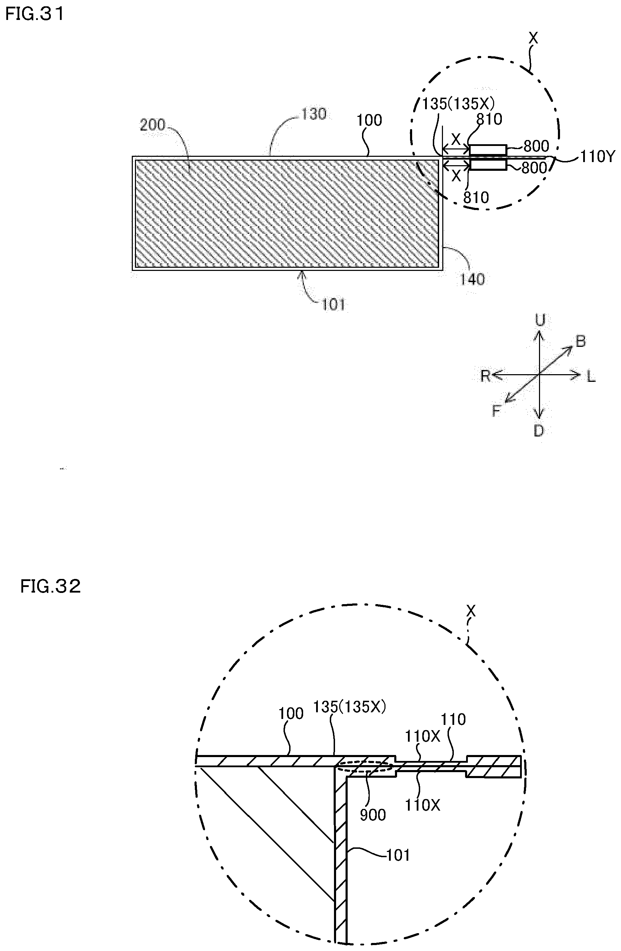

<5-8>
   In the first embodiment, the second sealed portion 120 is formed by folding the exterior member 101, and heat-sealing the heat-sealable resin layers of the exterior member 101. However, the method for forming the second sealed portion 120 is not limited thereto. Fig. 30 is a plan view schematically showing the electrical storage device 10 having a second sealed portion 120Y of another embodiment. The exterior member 101 includes a bulging portion 101XA extended outward from the outer packaging 100. The second sealed portion 120Y is formed by heat-sealing the heat-sealable resin layers of the bulging portion 101XA. In a portion of the bulging portion 101XA where the electrode terminal 300 is disposed, the heat-sealable resin layer of the bulging portion 101XA and the electrode terminal 300 are heat-sealed. In this modification, the sealing property of the outer packaging 100 is improved because the second sealed portion 120Y is more firmly sealed. In this modification, a portion of the bulging portion 101XA other than a portion heat-sealed to the electrode terminal 300 may be cut if necessary. This modification can also be applied to the modification shown in Fig. 22.
<5-9>
   In the first embodiment, a method for forming the first sealed portion 110 can be arbitrarily selected. As shown in Fig. 31, for example, the manufacturing apparatus may form the first sealed portion 110 by pressing a sealing bar 800 at a location on the outer packaging 100, which is away from a root 135X of a portion 110Y in which the first sealed portion 110 is to be formed, in step S110 (see Fig. 8). In this manufacturing method, a concave portion 110X that is the trace of being pressed by the sealing bar 800 is formed in the first sealed portion 110 as shown in Fig. 32. In a portion of the outer packaging 100 where the concave portion 110X is formed, surfaces of the exterior member 101 (heat-sealable resin layers) which face each other are directly joined. Between the concave portion 110X and the root 135X of the outer packaging 100, a resin lump 900 in which a part of the resin forming the exterior member 101 is melted is formed between the surfaces of the exterior member 101 which face each other. In a portion of the outer packaging 100 between the concave portion 110X and root 135X, surfaces of the exterior member 101 (heat-sealable resin layers) which face each other are joined with the resin lump 900 interposed therebetween. That is, in this modification, the first sealed portion 110 includes a portion where surfaces of the exterior member 101 which face each other are directly joined, and a portion where surfaces of the exterior member 101 which face each other are joined with the resin lump 900 interposed therebetween. The resin lump 900 prevents ingress of water vapor or the like into the outer packaging 100 from the outside, so that the barrier property of the outer packaging 100 is improved. When the sealing bar 800 is pressed against the portion 110Y, it is necessary that surfaces of the exterior member 101 in the portion where the resin lump 900 is formed, in other words, the portion between the concave portion 110X and the root 135X be in contact with each other.

A distance X between the root 135X and an edge 810 of the sealing bar 800 in the LR direction, in other words, a distance between the root 135X and the concave portion 110X in the LR direction, can be arbitrarily selected. From the viewpoint of forming the resin lump 900 over a wider range, the distance X is, for example, preferably 1 mm or more, more preferably 1.5 mm or more, still more preferably 1.7 mm or more. From the viewpoint of downsizing the first sealed portion 110, the distance X is, for example, preferably 10 mm or less, more preferably 5 mm or less, still more preferably 3 mm or less. The distance X is preferably in the range of, for example, about 1 mm or more and 10 mm or less, about 1 mm or more and 5 mm or less, about 1 mm or more and 3 mm or less, about 1.5 mm or more and 10 mm or less, about 1.5 mm or more and 5 mm or less, about 1.5 mm or more and 3 mm or less, about 1.7 mm or more and 10 mm or less, about 1.7 mm or more and 5 mm or less, or about 1.7 mm or more and 3 mm or less. The distance X is, for example, most preferably 2 mm. The distance X may be substantially 0. When the distance X is substantially 0, the sealing bar 800 is pressed against the outer packaging 100 such that the root 135X and the edge 810 of the sealing bar 800 are substantially coincident. The term "substantially coincident" includes a case where the root 135X and the edge 810 of the sealing bar 800 is completely coincident and a case where the locations of the root 135X and the edge 810 of the sealing bar 800 slightly deviate from each other due to an error during manufacturing, or the like. Therefore, the phrase "the distance X is substantially 0" includes, for example, a case where the distance X is less than 1 mm. These modifications can also be applied to the second to fourth embodiments. There is a possibility that the distance between the root 135X and the concave portion 110X is not constant depending on the shape of a portion of the concave portion 110X which corresponds to the edge 810 of the sealing bar 800. In this case, the distance X may be a distance between the center of the concave portion 110X and the center of the root 135X in the FB direction. In another example, the distance X may be calculated as an average of a plurality of values including a maximum and a minimum of the distance between the root 135X and the concave portion 110X. Similarly, there is a possibility that the distance between root 135X and concave portion 110X is not constant depending on the shape of the root 135X. In this case, the distance X may be a distance between the center of the root 135X and the center of the concave portion 110X in the FB direction. In another example, the distance X may be calculated as an average of a plurality of values including a maximum and a minimum of the distance between the concave portion 110X and the root 135X.

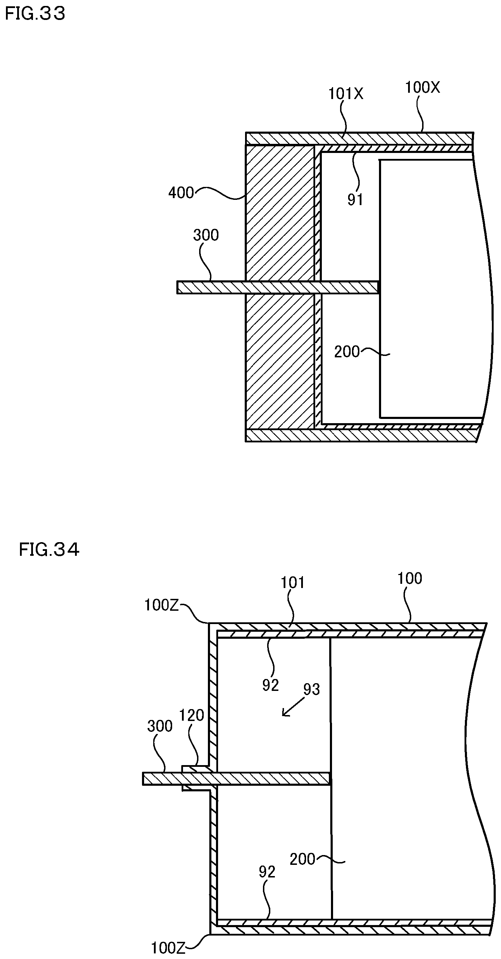

In the second embodiment, as shown in Fig. 33, the outer packaging 100X may include a barrier film 91 that suppresses passage of an electrolytic solution. The barrier film 91 is preferably disposed at least between the inner surface of the exterior member 101X and the electrode assembly 200. The barrier film 91 is preferably joined to the inner surface of the exterior member 101X. The barrier film 91 is preferably a material through which a gas generated inside the outer packaging 100X can pass. The material for forming the barrier film 91 is, for example, a resin film, a porous film, or the like. Since the outer packaging 100X includes the barrier film 91, it is possible to suppress degradation of the exterior member 101X by the electrolytic solution.

In the first embodiment, as shown in Fig. 34, the outer packaging 100 may include a buffering film 92 for enhancing the strength of the exterior member 101. The buffering film 92 is preferably disposed at least at a corner 100Z of the outer packaging 100 in the inner surface of the exterior member 101. Since the outer packaging 100 includes the buffering film 92, it is possible to suppress generation of pinholes in the outer packaging 100. The material for forming the buffering film 92 is, for example, a polyester-based material, a polyolefin-based material or a fluorine-based material. In this modification, as shown in Fig. 34, the second sealed portion 120 may be formed by joining the inner surface of the exterior member 101 and the electrode terminal 300. A space 93 between the second sealed portion 120 and the electrode assembly 200 is preferably filled with an electrolytic solution.

In the first embodiment, the adhesion film 30 for terminal which bonds to both metal and resin may be disposed between the electrode terminal 300 and the exterior member 101. The adhesion film 30 for terminal may be similarly disposed in other embodiments.

In the second embodiment, the adhesion film 30 for terminal which bonds to both metal and resin as in the first embodiment may be disposed between the lid 400 and the electrode terminal 300. The adhesion may be similarly disposed in other embodiments.

### [6. Examples]

The inventors of the present application manufactured electrical storage devices of Examples 1 and 2 and Comparative Example 1, and conducted a test for confirming whether moisture entered the electrode assembly or not. In the following description, among the elements forming the electrical storage devices of Examples 1 and 2 and Comparative Example 1, elements that are identical to those in the embodiment may be given the same symbols as in the embodiment for illustration purpose.

The electrical storage devices of Examples 1 and 2 and Comparative Example 1 are similar in configuration to the electrical storage device 10X of the second embodiment. The electrical storage devices of Examples 1 and 2 and Comparative Example 1 include two lids 500 (see Fig. 23). However, in the electrical storage devices of Examples 1 and 2 and Comparative Example 1, either of the two lids 500 is not divided into a first portion 510 and a second portion 520. The size of each of the two lids 500 is 100 mm in width, 30 mm in height and 5 mm in thickness. The electrical storage devices of Examples 1 and 2 and Comparative Example 1 include an aluminum block instead of the electrode assembly 200. The size of the aluminum block is 100 mm in width, 30 mm in height and 150 mm in thickness.

The inventors of the present application joined a film 20 of the first mode to a first surface 500A of each of the two lids 500. The size of one film 20 is 100 mm in width and 30 mm in height. The film 20 was used which had been left standing in a vacuum oven (-50 MPa) for 24 hours for drying before the test (before sealing). In the electrical storage device of Example 1, three films 20 are stacked and joined to each of the first surfaces 500A of the two lids 500. In the electrical storage device of Example 2, six films 20 are stacked and joined to each of the first surfaces 500A of the two lids 500. In the electrical storage devices of Examples 1 and 2, the film 20 covers substantially the entire first surface 500A of the lid 500. In the electrical storage device of Comparative Example 1, the film 20 is not joined to the lid 500.

The inventors of the present application wound the exterior member 101 around the two lids 500 to which the aluminum block and the film 20 were joined, thereby forming a first sealed portion 110. The exterior member 101 has a rectangular shape having a size of 300 mm × 160 mm. As heat-sealing conditions in formation of the first sealed portion 110, the temperature is 190°C, the pressure is 1 MPa, and the time is 3 seconds.

Next, the inventors of the present application heat-sealed the lateral surfaces of the two lids 500 (eight sides in total) and the exterior member 101 to form a second sealed portion 120. As heat-sealing conditions in formation of the second sealed portion 120, the temperature is 180°C, the pressure is 0.2 MPa, and the time is 5 seconds.

Next, the inventors of the present application cut the electrical storage devices of Examples 1 and 2 and Comparative Example 1 in half at a location of 80 mm from an end part of the lid 500 to form an opening, and took out the aluminum block from the opening. Thereafter, 20 g of a salt-free electrolytic solution (EC : DMC : DEC = 1 : 1 : 1) was injected from the opening, and heat-sealable resin layers 101C present in the opening were then strongly heat-sealed twice with a 7 mm-wide sealing bar to close the opening. The second strong heat-sealing was performed such that the strongly heat-sealed portion overlapped the first strongly heat-sealed portion by 4 mm. Therefore, the seal width of the opening is 10 mm. As heat-sealing conditions in strong heat-sealing of the heat-sealable resin layers 101C present in the opening, the temperature is 220°C, the pressure is 0.45 MPa, and the time is 3 seconds.

The electrical storage devices of Examples 1 and 2 and Comparative Example 1 were left standing in a thermostatic chamber at a temperature of 65°C and a humidity of 90% for 1 week, an arbitrary portion of the exterior member 101 was then opened, and the moisture content of the salt-free electrolytic solution inside was measured by a Karl Fischer method. The Karl Fischer moisture meter used in this test is a Karl Fischer moisture meter MKC-610 manufactured by Kyoto Electronics Manufacturing Co., Ltd. The anode solution used is a Chem-Aqua anode solution AGE, and the cathode solution is a Chem-Aqua cathode solution CGE. For the electrical storage devices of Examples 1 and 2 and Comparative Example 1, the moisture content of the salt-free electrolytic solution after the test was measured three times with 1 g of a sample, and the average value of the three measurements was taken as a measurement result. The term "1 g of a sample" includes an error, and means about 0.95 g to 1.05 g of a sample.

In the electrical storage device of Example 1, the moisture content of the salt-free electrolytic solution after the test was 3 mg after subtraction of the moisture content of the salt-free electrolytic solution before the test. In the electrical storage device of Example 2, the moisture content of the salt-free electrolytic solution after the test was 1.5 mg after subtraction of the moisture content of the salt-free electrolytic solution before the test. In the electrical storage device of Comparative Example 1, the moisture content of the salt-free electrolytic solution after the test was 25 mg after subtraction of the moisture content of the salt-free electrolytic solution before the test.

The electrical storage devices of Examples 1 and 2 were confirmed to have an only slightly increased moisture content of the electrolytic solution as compared to the moisture content of the electrolytic solution before the test. From this result, it is considered that an electrical storage device including the film 20 of the first mode can suppress ingress of moisture from the end part of the heat-sealable resin layer 101C of the exterior member 101 and ingress of moisture contained in the heat-sealable resin layer 101C of the exterior member 101 into the electrode assembly 200.

### [7. Supplemental items]

The first mode of the film 20 of each of the embodiments described above includes items shown below.

Item 1A. A resin film for electrical storage devices which is disposed inside a barrier layer of an exterior member of an electrical storage device, the resin film including a water absorbent.

Item 2A. The resin film for electrical storage devices according to item 1A, in which the water absorbent is an inorganic water absorbent.

Item 3A. The resin film for electrical storage devices according to item 1A or 2A, in which the inorganic water absorbent is at least one selected from the group consisting of calcium oxide, anhydrous magnesium sulfate, magnesium oxide, calcium chloride, zeolite, aluminum oxide, silica gel, alumina gel, and dried alum.

Item 4A. The resin film for electrical storage devices according to any one of items 1A to 3A, in which a content of the water absorbent is 0.1 parts by mass or more based on 100 parts by mass of the resin contained in the resin film for electrical storage devices.

Item 5A. The resin film for electrical storage devices according to any one of items 1A to 4A, including two or more layers.

Item 6A. The resin film for electrical storage devices according to item 5A, in which among the two or more layers, at least one layer contains the water absorbent, and at least one layer contains a sulfur-based gas absorbent.

Item 7A. The resin film for electrical storage devices according to any one of items 1A to 6A, in which the layer of the resin film for electrical storage devices, which contains the water absorbent, contains 0.5 masses or more of the absorbent based on 100 parts by mass of the resin.

Item 8A. The resin film for electrical storage devices according to any one of items 1A to 7A, including a heat-sealable resin.

Item 9A. The resin film for electrical storage devices according to item 8A, in which the heat-sealable resin contains at least one selected from the group consisting of polyester and polyolefin.

The second mode of the film 20 of each of the embodiments described above includes items shown below.

Item 1B. A resin film for electrical storage devices which is disposed inside a barrier layer of an exterior member of an electrical storage device, the resin film including a sulfur-based gas absorbent.

Item 2B. The resin film for electrical storage devices according to item 1B, in which a content of the sulfur-based gas absorbent is 0.1 parts by mass or more based on 100 parts by mass of the resin contained in the resin film for electrical storage devices.

Item 3B. The resin film for electrical storage devices according to item 1B or 2B, in which the sulfur-based gas absorbent has a maximum particle size of 20 µm or less and a number average particle size of 0.1 µm or more and 15 µm or less.

Item 4B. The resin film for electrical storage devices according to any one of items 1B to 3B, in which the sulfur-based gas absorbent contains at least one selected from the group consisting of a chemical sulfur-based gas absorbent and a physical sulfur-based gas absorbent.

Item 5B. The resin film for electrical storage devices according to item 4B, in which the physical sulfur-based gas absorbent contains at least one selected from the group consisting of hydrophobic zeolite, bentonite and sepiolite in which a molar ratio of SiO₂ to Al₂O₃ is 1/1 to 2000/1.

Item 6B. The resin film for electrical storage devices according to item 4B or 5B, in which the chemical sulfur-based gas absorbent is a metal oxide, or an inorganic substance carrying or containing a metal or metal ions.

Item 7B. The resin film for electrical storage devices according to item 6B, in which the metal oxide contains at least one selected from the group consisting of CuO, ZnO and AgO.

Item 8B. The resin film for electrical storage devices according to item 6B or 7B, in which the metal species in the inorganic substance carrying or containing a metal or metal ions is at least one selected from the group consisting of Ca, Mg, Na, Cu, Zn, Ag, Pt, Au, Fe, Al and Ni.

Item 9B. The resin film for electrical storage devices according to any one of items 1B to 8B, in which the layer of the resin film for electrical storage devices, which contains the sulfur-based gas absorbent, contains 5 masses or more of the sulfur-based gas absorbent based on 100 parts by mass of the resin.

Item 10B. The resin film for electrical storage devices according to any one of items 1B to 9B, including a heat-sealable resin.

Item 11B. The resin film for electrical storage devices according to item 10B, in which the heat-sealable resin contains at least one selected from the group consisting of polyester and polyolefin.

### Reference Signs List

10, 10X, 10XA, 10Y, 10Z Electrical storage device
20 Resin film for electrical storage devices
30 Adhesion film for terminal
100, 100X, 100Y Outer packaging
101, 101Y, 101Z1, 101Z2 Exterior member
101A Base material layer
101B Barrier layer
101C Heat-sealable resin layer
101Z Laminate
101X Bulging portion
110, 110Z, 154 First sealed portion
110X Concave portion
120, 120X, 120Y Second sealed portion
130, 130Z First surface
135, 135Z Side 1
35X Root
140, 140Z Second surface
150 Piece portion
151 Joining region
152 Space
153 Non-joining region
200 Electrode assembly
210 Electrode
215 Current collector
300 Electrode terminal
500A First surface
500B Second surface
400, 500, 700 Lid
610, 710 Metal portion
800 Sealing bar
C1 Corner

## Claims

1. An electrical storage device comprising:
an electrode assembly;
an electrode terminal connected to the electrode assembly; and
an outer packaging that seals the electrode assembly,
the outer packaging including a film-shaped exterior member,
the outer packaging including a first sealed portion in which the exterior member is joined with the electrode assembly wrapped therein,
the exterior member including a barrier layer,
the electrical storage device including a resin film for electrical storage devices which is disposed in at least a part of a region inside the barrier layer,
the resin film for electrical storage devices containing at least one of a water absorbent and a gas absorbent.

2. The electrical storage device according to claim 1, wherein the resin film for electrical storage devices is used as a heat-sealable resin layer of the exterior member.

3. The electrical storage device according to claim 1 or 2, wherein the resin film for electrical storage devices is used as an adhesion film for terminal which joins the exterior member and the electrode terminal.

4. The electrical storage device according to claim 1 or 2, further comprising a lid which is disposed on a lateral side of the electrode assembly and to which the electrode terminal is attached, wherein
a part of the lid is joined to the exterior member.

5. The electrical storage device according to claim 4, wherein a material for forming the lid includes at least one of a resin material and a metal material.

6. The electrical storage device according to claim 4, wherein the resin film for electrical storage devices is disposed in at least a part of a region between the lid and the electrode assembly.

7. The electrical storage device according to claim 4, wherein the resin film for electrical storage devices is disposed in at least a part of a region between the lid and the electrode terminal.

8. The electrical storage device according to claim 4, wherein the resin film for electrical storage devices is disposed in at least a part of a region between the lid and the exterior member.

9. The electrical storage device according to claim 4, wherein
the lid has a hole through which the electrode terminal passes, and
the resin film for electrical storage devices is disposed in the hole.

10. The electrical storage device according to claim 4, wherein
the lid includes a first surface facing the electrode assembly, and a second surface on a side opposite to the first surface, and
the resin film for electrical storage devices is joined to at least a part of the second surface of the lid.
